(19) Europäisches Patentamt

European Patent Office

Office européen des brevets

(11) **EP 3 335 264 B1**

(12) **FASCICULE DE BREVET EUROPEEN**

(45) Date de publication et mention
de la délivrance du brevet:
**01.05.2019 Bulletin 2019/18**

(21) Numéro de dépôt: **16756983.9**

(22) Date de dépôt: **12.08.2016**

(51) Int Cl.:
*H01M 8/12* (2016.01)      *C25B 15/08* (2006.01)
*C25B 1/00* (2006.01)      *C25B 1/08* (2006.01)
*C25B 9/04* (2006.01)      *C25B 9/20* (2006.01)
*H01M 8/24* (2016.01)      *H01M 8/04298* (2016.01)
*H01M 8/249* (2016.01)     *C25B 9/18* (2006.01)
*H01M 8/124* (2016.01)

(86) Numéro de dépôt international:
**PCT/EP2016/069281**

(87) Numéro de publication internationale:
**WO 2017/025636 (16.02.2017 Gazette 2017/07)**

(54) **PROCÉDÉS D' (DE CO-) ÉLECTROLYSE DE L'EAU OU DE PRODUCTION D'ÉLECTRICITÉ À HAUTE TEMPÉRATURE, À FAIBLES GRADIENTS THERMIQUES, AU SEIN RESPECTIVEMENT D'UN RÉACTEUR ELECTROCHIMIQUE (SOEC) OU D'UNE PILE À COMBUSTIBLE (SOFC)**

VERFAHREN ZUR WASSER (KO-)ELEKTROLYSE BZW. STROMERZEUGUNG BEI HOHEN TEMPERATUREN, MIT NIEDRIGEN THERMISCHEN GRADIENTEN, INNERHALB EINES ELEKTROCHEMISCHEN REAKTORS (SOEC) BZW. EINER BRENNSTOFFZELLE (SOFC)

PROCESS OF (CO-)ELECTROLYSIS OF WATER OR ELECTRICITY PRODUCTION AT HIGH TEMPERATURE, WITH LOW THERMAL GRADIENTS, INSIDE AN ELECTROCHEMICAL REACTOR (SOEC) OR A FUEL CELL (SOFC) RESPECTIVELY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.08.2015 FR 1557685**

(43) Date de publication de la demande:
**20.06.2018 Bulletin 2018/25**

(73) Titulaire: **Commissariat à l'Énergie Atomique et aux Énergies Alternatives
75015 Paris (FR)**

(72) Inventeurs:
• **REYTIER, Magali**
**38250 Villard De Lans (FR)**
• **BARDI, Nicolas**
**38380 Miribel-les-Echelles (FR)**

(74) Mandataire: **Nony
11 rue Saint-Georges
75009 Paris (FR)**

(56) Documents cités:
**EP-A2- 1 411 571      CA-A1- 2 913 864
FR-A1- 3 016 084      US-A1- 2013 130 139**

## Description

Domaine technique

La présente invention concerne le domaine des piles à combustibles à oxydes solides (SOFC, acronyme anglais pour « *Solid Oxide Fuel Cell* ») et celui de l'électrolyse de l'eau à haute température (EHT, ou EVHT pour électrolyse de la vapeur d'eau à haute température, ou HTE acronyme anglais pour « *High Temperature Electrolysis* », ou encore HTSE acronyme anglais pour « *High Temperature Steam Electrolysis* ») également à oxydes solides (SOEC, acronyme anglais pour « *Solid Oxide Electrolysis Cell* »).

L'invention a trait plus particulièrement à de nouveaux procédés de fonctionnement d'un réacteur d'électrolyse de l'eau à haute température (EHT) de type SOEC pour produire de l'hydrogène $H_2$ à partir de vapeur d'eau $H_2O$ ou de co-électrolyse du dioxyde de carbone $CO_2$ et de l'eau $H_2O$ pour produire du gaz de synthèse (mélange de CO et $H_2$), ou d'une pile à combustible de type SOFC, à empilement de cellules électrochimiques élémentaires à oxydes solides.

Bien que décrite en référence principalement à l'application d'électrolyse de l'eau à haute température, l'invention s'applique tout aussi bien à la co-électrolyse du dioxyde de carbone $CO_2$ et de l'eau $H_2O$, ou à une pile à combustible SOFC alimentée en H2 ou en méthane $CH_4$, en tant que combustible et en Air ou oxygène $O_2$ en tant que comburant.

Art antérieur

L'électrolyse de l'eau est une réaction électrochimique qui décompose l'eau en dioxygène et dihydrogène gazeux avec l'aide d'un courant électrique selon la réaction:

$$H_2O \rightarrow H_2 + \tfrac{1}{2}\, O_2.$$

Pour réaliser l'électrolyse de l'eau, il est avantageux de la réaliser à haute température typiquement entre 600 et 950°C, car une partie de l'énergie nécessaire à la réaction peut être apportée par de la chaleur moins chère que l'électricité et la réalisation de la réaction est plus efficace à haute température et ne nécessite pas de catalyseur. Pour mettre en oeuvre l'électrolyse à haute température, il est connu d'utiliser un électrolyseur de type SOEC (acronyme anglais de « *Solid Oxyde Electrolysis Cell* »), constitué d'un empilement de motifs élémentaires comportant chacun une cellule d'électrolyse à oxydes solides, constituée de trois couches anode/électrolyte/cathode superposées l'une sur l'autre, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extraits dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules. Pour réaliser l'électrolyse de la vapeur d'eau à haute température EHT, on injecte de la vapeur d'eau $H_2O$ dans le compartiment cathodique. Sous l'effet du courant appliqué à la cellule, la dissociation des molécules d'eau sous forme vapeur est réalisée à l'interface entre l'électrode à hydrogène (cathode) et l'électrolyte : cette dissociation produit du gaz dihydrogène H2 et des ions oxygène. Le dihydrogène est collecté et évacué en sortie de compartiment à hydrogène. Les ions oxygène $O^{2-}$ migrent à travers l'électrolyte et se recombinent en dioxygène à l'interface entre l'électrolyte et l'électrode à oxygène (anode).

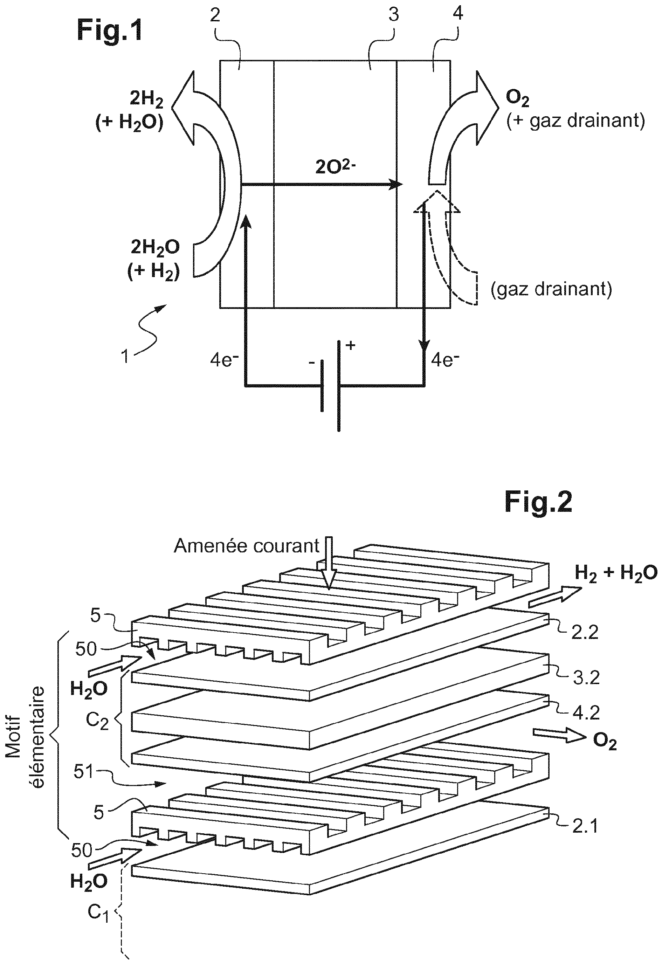

Comme schématisée en figure 1, chaque cellule d'électrolyse élémentaire 1 est formée d'une cathode 2 et d'une anode 4, placées de part et d'autre d'un électrolyte solide 3. Les deux électrodes (cathode et anode) 2,4 sont des conducteurs, en matériau poreux, et l'électrolyte 3 est étanche au gaz, isolant électronique et conducteur ionique. L'électrolyte peut être en particulier un conducteur anionique, plus précisément un conducteur anionique des ions $O^{2-}$ et l'électrolyseur est alors dénommé électrolyseur anionique.

Les réactions électrochimiques se font à l'interface entre chacun des conducteurs électroniques et le conducteur ionique.

A la cathode 2, la demi-réaction est la suivante :

$$2\, H_2O + 4\, e^- \rightarrow 2\, H_2 + 2\, O^{2-}.$$

A l'anode 4, la demi-réaction est la suivante:

$$2\, O^{2-} \rightarrow O_2 + 4\, e^-.$$

L'électrolyte 3 intercalé entre les deux électrodes 2, 4 est le lieu de migration des ions $O^{2-}$ sous l'effet du champ électrique créé par la différence de potentiel imposée entre l'anode 4 et la cathode 2.

Comme illustré entre parenthèses en figure 1, la vapeur d'eau en entrée de cathode peut être accompagnée d'hydrogène $H_2$ et l'hydrogène produit et récupéré en sortie peut être accompagné de vapeur d'eau. De même, comme illustré en pointillés, un gaz drainant, tel que l'air peut en outre être injecté en entrée pour évacuer l'oxygène produit. L'injection d'un gaz drainant a pour fonction supplémentaire de jouer le rôle de régulateur thermique.

Un réacteur d'électrolyse élémentaire est constitué d'une cellule élémentaire telle que décrite ci-dessus, avec une cathode 2, un électrolyte 3, et une anode 4 et de deux connecteurs mono-polaires qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des dispositifs d'interconnexion, usuellement appelés interconnecteurs ou plaques d'interconnexion bipolaires. L'ensemble est positionné entre deux plaques d'interconnexion d'extrémité qui supportent les alimentations électriques et des alimentations en gaz de l'électrolyseur (réacteur d'électrolyse).

Un réacteur d'électrolyse ou électrolyseur de l'eau à haute température (EHT) comprend ainsi au moins une, généralement une pluralité de cellules d'électrolyse empilées les uns sur les autres, chaque cellule élémentaire étant formée d'un électrolyte, d'une cathode et d'une anode, l'électrolyte étant intercalé entre l'anode et la cathode.

Les dispositifs d'interconnexion fluidique et électrique qui sont des conducteurs électroniques, sont en contact électrique avec les électrodes et assurent en général les fonctions d'amenée et de collecte de courant électrique et délimitent un ou des compartiments de circulation des gaz. Plus précisément, un interconnecteur assure le contact électrique par l'une de ses faces avec la cathode d'une cellule et par l'autre de ses faces avec l'anode de la cellule adjacente.

Ainsi, un compartiment dit cathodique a pour fonction la distribution du courant électrique et de la vapeur d'eau ainsi que la récupération de l'hydrogène à la cathode en contact.

Un compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur de vapeur d'eau à haute température selon l'état de l'art. Cet électrolyseur EHT comporte une pluralité de cellules d'électrolyse élémentaires C1, C2... de type à oxydes solides (SOEC) empilées alternativement avec des interconnecteurs 5. Chaque cellule C1, C2... est constituée d'une cathode 2.1, 2.2,... et d'une anode 4.1, 4.2, entre lesquelles est disposé un électrolyte 3.1, 3.2.... L'ensemble des cellules d'électrolyse est généralement alimenté en série par le courant électrique et en parallèle par les gaz.

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. Le collectage de l'hydrogène produit et de la vapeur d'eau résiduelle à la cathode 2.1, 2.2 ... est effectué dans le compartiment cathodique 50 en aval de la cellule C1, C2... après dissociation de la vapeur d'eau par celle-ci. Le collectage de l'oxygène produit à l'anode 4.2 est effectué dans le compartiment anodique 51 en aval de la cellule C1, C2... après dissociation de la vapeur d'eau par celle-ci.

L'interconnecteur 5 assure le passage du courant entre les cellules C1 et C2 par contact direct avec les électrodes adjacentes, c'est-à-dire entre l'anode 4.2 et la cathode 2.1.

Dans une pile à combustible à oxydes solides SOFC selon l'état de l'art, les cellules C1, C2... et interconnecteurs 5 utilisés sont les mêmes composants, mais le fonctionnement est inverse de celui d'un électrolyseur EHT tel qui vient d'être expliqué avec un sens du courant inversé, avec de l'air qui alimente les compartiments cathodiques 51 et de l'hydrogène ou du méthane en tant que combustible qui alimente les compartiments anodiques 50.

Un fonctionnement satisfaisant d'un électrolyseur EHT ou d'une pile à combustible SOFC nécessite entre autres les fonctions essentielles suivantes:

A/ une bonne isolation électrique entre deux interconnecteurs adjacents dans l'empilement, sous peine de court-circuiter la cellule électrochimique élémentaire intercalée entre les deux interconnecteurs,

B/ une bonne étanchéité entre les deux compartiments distincts, i.e. anodique et cathodique, sous peine de recombinaison des gaz produits entraînant une baisse de rendement et surtout l'apparition de points chauds endommageant l'empilement,

C/ une bonne distribution des gaz à la fois en entrée et en récupération des gaz produits, sous peine de perte de rendement, d'inhomogénéité de pression et de température au sein des différentes cellules élémentaires voire de dégradations rédhibitoires des cellules.

De plus, le point de fonctionnement retenu pour le réacteur d'électrolyse ou la pile SOFC fixe aussi les conditions thermiques dans l'empilement. En effet, pour les électrolyses réalisées à haute température, l'énergie ⊿H nécessaire à la dissociation de la molécule d'entrée ($H_2O$ ou $CO_2$) peut être apportée sous forme électrique et/ou de chaleur. L'énergie thermique apportée Q se définit alors en fonction de la tension U aux bornes de chaque cellule d'électrolyse par la relation :

$$Q = \frac{I}{2F}\Delta H - U \cdot I \, ,$$

dans laquelle U est la tension électrique, I est le courant électrique et F est la constante de Faraday.

Ainsi, on définit trois régimes de fonctionnement pour l'électrolyse ou la co-électrolyse, correspondant à trois modes thermiques différents pour l'empilement de cellules:

- le mode dit autothermique dans lequel la tension imposée $U_{imp}$ est égale à ⊿H/2F. La chaleur consommée par la réaction de dissociation est complètement compensée par les différentes résistances électriques de l'électrolyseur (irréversibilités). L'électrolyseur n'a pas besoin de gestion thermique particulière tout en restant stable en température.
- le mode dit endothermique dans lequel la tension imposée $U_{imp}$ est inférieure à ⊿H/2F. L'électrolyseur consomme plus de chaleur que les pertes électriques en son sein. Cette chaleur nécessaire doit alors lui être apportée par un autre moyen, sous peine de voir sa température chuter irrémédiablement.
- le mode dit exothermique dans lequel la tension imposée Uimp est supérieure à ⊿H / 2F. L'électrolyse consomme alors moins de chaleur que les pertes électriques par effet Joule. Ce dégagement de chaleur au sein de l'électrolyseur doit alors être évacué par un autre moyen, sous peine de voir sa température augmenter de manière rédhibitoire.

Le fonctionnement d'une pile alimentée en méthane $CH_4$ nécessite quant à lui des précautions. En effet, la réaction de reformage interne, selon l'équation $CH_4+H_2O \rightarrow 3H_2+CO$, catalysée par le cermet, en générale en Nickel-zircone de l'électrode alimentée en $CH_4$, est fortement endothermique, alors que la réaction d'oxydation de l'hydrogène au sein de la pile est fortement exothermique. Ainsi, le fonctionnement en pile peut aussi varier d'un mode endothermique à un mode exothermique selon le ratio entre la réaction de reformage interne et la densité de courant. Sans précaution particulière, cela nécessite de gérer de forts gradients thermiques dans l'empilement, entre l'entrée et la sortie des gaz, ces gradients thermiques importants pouvant être rédhibitoires car induisant de fortes contraintes mécaniques. De plus, le fonctionnement d'une pile SOFC alimentée uniquement en hydrogène pur conduit rapidement à un échauffement de l'empilement limitant les puissances accessibles et le rendement, si de forts débits sont utilisés pour le refroidissement.

Ainsi, les réactions électrochimiques nécessaires au fonctionnement de ce type d'empilement en électrolyseur ou pile à combustible SOFC peuvent être réalisées dans diverses conditions électriques et thermiques, chacune ayant ses propres avantages et ses inconvénients.

En particulier, en mode endothermique pour l'électrolyse, on consomme moins d'électricité mais on produit moins d'hydrogène et il faut fournir de la chaleur à l'empilement. L'intérêt de ce point de fonctionnement réside dans la disponibilité d'une source de chaleur peu coûteuse. Tout dépend alors de la nature, de la température de cette source thermique et du design de l'interconnecteur permettant de valoriser cette chaleur au mieux.

A contrario, le mode exothermique pour l'électrolyse comme pour la pile conduit à une production importante soit d'hydrogène soit d'électricité, mais il faut refroidir l'empilement, ce qui peut être difficile à réaliser et coûteux énergétiquement. L'intérêt de ce mode exothermique dépend alors beaucoup du coût de l'électricité et de l'utilisation de la chaleur excédentaire.

Une contrainte importante est de gérer au mieux ces régimes de fonctionnement thermiques d'une pile à combustible (SOFC) ou d'un électrolyseur (EHT). En effet, quel que soit le mode considéré, les gradients thermiques au sein de l'empilement peuvent être très importants, ce qui génère des contraintes mécaniques élevées pouvant conduire jusqu'à la casse des cellules et/ou joints. De plus, si on refroidit mal l'empilement, on peut atteindre des températures trop élevées notamment pour les joints d'étanchéité.

Or, les éléments internes à la pile SOFC ou à l'électrolyseur, notamment les cellules élémentaires, sont réalisés au moins en partie en céramique, ceux-ci sont donc très sensibles aux gradients de température et ne sont pas aptes à supporter ni un choc thermique, ni un gradient thermique trop important (quelques dizaines de degrés entre l'entrée et la sortie des gaz).

Par ailleurs, pour assurer la longévité de la pile ou de l'électrolyseur et son bon fonctionnement, il est préférable d'assurer une répartition de la température au sein du réacteur, la plus homogène possible. On recherche typiquement des températures ne variant pas plus de 10°C à 20 °C dans tout l'empilement.

Le brevet US 6855451B2 divulgue un interconnecteur pour réacteur à empilement de pile combustible SOFC, avec trois tôles planes stratifiées et assemblées entre elles dont la périphérie est percée pour former des clarinettes dédiées à l'alimentation des gaz combustible d'une part et oxydant d'autre part. Aucune régulation thermique de l'empilement n'est évoquée dans cette demande.

La demande de brevet US 2014/40093805 s'intéresse à la régulation thermique d'une pile à combustible SOFC à empilement, et propose d'intégrer des échangeurs thermiques au sein de l'empilement avec un du côté de chaque cathode de cellule et un du côté de chaque anode.

La demande de brevet US 2013/0130139 divulgue une pile à combustible SOFC à empilement avec une alimentation en combustible différenciée d'un premier groupe de cellules électrochimiques à un deuxième groupe adjacent au premier. Cette solution est avantageuse dans la mesure où elle permet de réduire au moins en partie le gradient thermique le long de l'empilement. Cependant, l'alimentation d'un groupe à l'autre est nécessairement en série et uniquement à co-courant, comme le montre clairement la figure 2 de cette demande. Cela limite les possibilités de modes de fonctionnement de la pile.

Il existe donc un besoin d'améliorer les réacteurs d'électrolyse ou de co-électrolyse et les piles à combustible SOFC fonctionnant à haute température, notamment afin de limiter encore davantage les gradients thermiques au sein de leur empilement en vue d'augmenter leur durée de vie.

De plus, ce besoin de refroidissement optimum a un impact sur le coût du procédé d'électrolyse ou de co-électrolyse ou de fonctionnement d'une pile à combustible SOFC. En effet, de forts débits d'air à des fins de refroidissement conduisent à une consommation électrique des auxiliaires trop importantes.

Il existe donc aussi un besoin de réduire le coût du refroidissement des réacteurs d'électrolyse ou de co-électrolyse et les piles à combustible SOFC fonctionnant à haute température.

Un but de l'invention est de répondre au moins en partie à ces besoins.

Exposé de l'invention

Pour ce faire, l'invention concerne, sous une première alternative, un procédé d'électrolyse à haute température de la vapeur d'eau $H_2O$, ou de co-électrolyse de la vapeur d'eau $H_2O$ et du dioxyde de carbone $CO_2$, mis en oeuvre dans un réacteur comportant un empilement de cellules d'électrolyse élémentaires de type à oxydes solides, formées chacune d'une cathode, d'une anode et d'un électrolyte intercalé entre la cathode et l'anode, et une pluralité d'interconnecteurs électrique et fluidique agencés chacun entre deux cellules élémentaires adjacentes avec une de ses faces en contact électrique avec l'anode d'une des deux cellules élémentaires et l'autre de ses faces en contact électrique avec la cathode de l'autre des deux cellules élémentaires.

Dans le procédé selon l'invention:

- on alimente en vapeur d'eau ou en un mélange de vapeur d'eau $H_2O$ et de dioxyde de carbone $CO_2$ dans une première zone chaque interconnecteur d'un premier groupe, et on le distribue à une cathode de chaque cellule élémentaire, du premier groupe, puis on récupère l'hydrogène $H_2$ produit ou le gaz de synthèse (mélange de monoxyde de carbone CO et d'hydrogène $H_2$) dans une deuxième zone de chaque interconnecteur du premier groupe,
- on alimente en vapeur d'eau ou en un mélange la vapeur d'eau $H_2O$ et de dioxyde de carbone $CO_2$ dans une première zone de chaque interconnecteur d'un deuxième groupe, dont au moins un est adjacent au premier groupe, et on le distribue à une cathode de chaque cellule élémentaire, du deuxième groupe, dont au moins une est adjacente à une cellule du premier groupe, puis on récupère l'hydrogène $H_2$ produit ou le gaz de synthèse (mélange de monoxyde de carbone CO et d'hydrogène $H_2$) dans une deuxième zone de chaque interconnecteur du deuxième groupe, les première et deuxième zones des interconnecteurs du deuxième groupe étant non situées à l'aplomb respectivement des première et deuxième zones des interconnecteur du premier groupe.

Selon le procédé de l'invention, au sein de l'empilement, l'alimentation et la circulation respectivement aux interconnecteurs et aux cellules du premier groupe sont réalisées, de manière indépendante par rapport à l'alimentation et la circulation respectivement aux interconnecteurs et aux cellules du deuxième groupe.

Selon une variante, les première et deuxième zones des premier et deuxième groupes d'interconnecteurs sont agencées de sorte que la distribution de la vapeur d'eau ou du mélange de vapeur d'eau $H_2O$ et de dioxyde de carbone $CO_2$, à la cathode des cellules du premier groupe est réalisée à co-courant de celle aux cellules du deuxième groupe.

Alternativement, les première et deuxième zones des premier et deuxième groupes d'interconnecteurs sont agencées de sorte que la distribution de la vapeur d'eau ou du mélange de vapeur d'eau $H_2O$ et de dioxyde de carbone $CO_2$, à la cathode des cellules du premier groupe est réalisée à contre-courant de celle aux cellules du deuxième groupe.

Selon un premier mode de réalisation avantageux :

- on alimente en gaz drainant, tel que de l'air, (EI(02)) une troisième zone de chaque interconnecteur du premier groupe, et on le distribue à l'anode de chaque cellule du premier groupe, puis on récupère l'oxygène $O_2$ produit et le cas échéant le gaz drainant (S 1(02)) dans une quatrième zone de chaque interconnecteur du premier groupe,

- on alimente en gaz drainant, tel que de l'air, (E2(O2)) une troisième zone de chaque interconnecteur du deuxième groupe, et on le distribue à l'anode de chaque cellule du deuxième groupe, puis on récupère l'oxygène $O_2$ produit (S2(O2)) et le cas échéant le gaz drainant dans une quatrième zone de chaque interconnecteur du deuxième groupe , les troisième et quatrième zones du deuxième groupe d'interconnecteurs étant situées à l'aplomb respectivement des troisième et quatrième zones du premier groupe d'interconnecteurs, de sorte à avoir une alimentation en gaz drainant et une récupération d'oxygène produit communes aux premier et deuxième groupe.

Selon un deuxième mode de réalisation avantageux :

- on alimente en gaz drainant, tel que de l'air, (El(02)) une troisième zone de chaque interconnecteur du premier groupe, et on le distribue à l'anode de chaque cellule du premier groupe, puis on récupère l'oxygène $O_2$ produit et le cas échéant le gaz drainant S1(O2)) dans une quatrième zone de chaque interconnecteur du premier groupe,
- on alimente en gaz drainant, tel que de l'air, (E2(O2)) une troisième zone de chaque interconnecteur du deuxième groupe et on le distribue à l'anode de chaque cellule du deuxième groupe, puis on récupère l'oxygène $O_2$ produit (S2(O2)) et le cas échéant le gaz drainant dans une quatrième zone de chaque interconnecteur du deuxième groupe, les troisième et quatrième zones du deuxième groupe d'interconnecteurs étant non situées à l'aplomb respectivement des troisième et quatrième zones du premier groupe d'interconnecteurs, de sorte à avoir une alimentation en gaz drainant et une récupération d'oxygène produit séparées entre le premier groupe et le deuxième groupe.

Selon ce deuxième mode, les troisième et quatrième zones des premier et deuxième groupe d'interconnecteurs sont agencées de sorte que la distribution du gaz drainant et de l'$O_2$ produit par électrolyse à l'anode des cellules du premier groupe est réalisée à contre-courant de celle des cellules du deuxième groupe.

L'invention concerne également, sous une deuxième alternative un procédé de production d'électricité à haute température, mis en oeuvre dans une pile à combustible à oxydes solides (SOFC) comportant un empilement de cellules électrochimiques élémentaires de type SOFC, formées chacune d'une cathode, d'une anode et d'un électrolyte intercalé entre la cathode et l'anode, et une pluralité d'interconnecteurs (électrique et fluidique agencés chacun entre deux cellules élémentaires adjacentes avec une de ses faces en contact électrique avec l'anode d'une des deux cellules élémentaires et l'autre de ses faces en contact électrique avec la cathode de l'autre des deux cellules élémentaires.

Dans le procédé selon l'invention:

- on alimente en combustible une première zone de chaque interconnecteur d'un premier groupe, et on le distribue à une anode de chaque cellule élémentaire du premier groupe, puis on récupère le surplus de combustible et l'eau produite dans une deuxième zone de chaque interconnecteur du premier groupe,
- on alimente en combustible une première zone de chaque interconnecteur, d'un deuxième groupe, dont au moins un est adjacent à un interconnecteur du premier groupe, et on le distribue à une anode de chaque cellule élémentaire du deuxième groupe, dont au moins une est adjacente une cellule du premier groupe, puis on récupère le surplus de combustible et l'eau produite dans une deuxième zone de chaque interconnecteur du deuxième groupe, les première et deuxième zones des interconnecteurs du deuxième groupe étant non situées à l'aplomb respectivement des première et deuxième zones des interconnecteurs du premier groupe.

Selon le procédé de l'invention, au sein de l'empilement, l'alimentation et la circulation respectivement aux interconnecteurs et aux cellules du premier groupe sont réalisées, de manière indépendante par rapport à l'alimentation et la circulation respectivement aux interconnecteurs et aux cellules du deuxième groupe.

Selon une variante, les première et deuxième zones des premier et deuxième groupes d'interconnecteurs sont agencées de sorte que la distribution du combustible à l'anode des cellules du premier groupe est réalisée à co-courant de celle aux cellules du deuxième groupe.

Alternativement, les première et deuxième zones des premier et deuxième groupes d'interconnecteurs sont agencées de sorte que la distribution du combustible à l'anode des cellules du premier groupe est réalisée à contre-courant de celle à aux cellules du deuxième groupe.

Selon un premier mode de réalisation avantageux :

- on alimente en comburant, tel que de l'air, (E1(O2)) une troisième zone de chaque interconnecteur, du premier groupe et on le distribue à la cathode de chaque cellule du premier groupe, puis on récupère le surplus de comburant (S 1(02)) dans une quatrième zone de chaque interconnecteur du premier groupe ,
- on alimente en comburant, tel que de l'air, (E2(O2)) une troisième zone de chaque interconnecteur du deuxième groupe, et on le distribue à la cathode de chaque cellule du deuxième groupe, puis on récupère le surplus de comburant (S2(O2)) dans une quatrième zone de chaque interconnecteur du deuxième ,groupe, les troisième et quatrième zones du deuxième groupe d'interconnecteurs étant situées à l'aplomb respectivement des troisième et quatrième zones du premier groupe d'interconnecteurs, de sorte à avoir une alimentation en comburant et une récupération de surplus de comburant communes aux premier et deuxième groupes.

Selon un deuxième mode de réalisation avantageux :

- on alimente en comburant, tel que de l'air, (E1(O2)) une troisième zone de chaque interconnecteur du premier groupe, et on le distribue à la cathode de chaque cellule du premier groupe, puis on récupère le surplus de comburant (S 1(02)) dans une quatrième zone de chaque interconnecteur du premier groupe,
- on alimente en comburant, tel que de l'air, (E2(O2)) une troisième zone de chaque interconnecteur, du deuxième groupe, et on le distribue à la cathode de chaque cellule du deuxième groupe, puis on récupère le surplus de comburant (S2(O2)) dans une quatrième zone de chaque interconnecteur du deuxième groupe, les troisième et quatrième zones du deuxième groupe d'interconnecteurs étant non situées à l'aplomb respectivement des troisième et quatrième zones du premier groupe d'interconnecteurs, de sorte à avoir une alimentation en comburant et une récupération de surplus de comburant séparées entre le premier groupe et le deuxième groupe.

Selon ce deuxième mode, les troisième et quatrième zones des premier et deuxième groupe d'interconnecteurs sont agencées de sorte que la distribution du comburant à la cathode des cellules du premier groupe est réalisée à contre-courant de celle des cellules du deuxième groupe.

Le combustible peut être avantageusement de l'hydrogène ou le méthane (CH4), ou un mélange des deux.

Autrement dit, deux cellules adjacentes ou deux groupes de cellules adjacents sont en série électriquement comme usuellement, mais alimentés par deux colonnes d'alimentation en gaz combustible, appelées usuellement clarinettes, traversant l'ensemble des interconnecteurs et des cadres d'étanchéité, qui sont indépendantes l'une de l'autre dans l'empilement tout comme les deux clarinettes de récupération des gaz (soit l'H2 ou gaz de synthèse produit pour l'électrolyseur, soit le surplus de combustible pour la pile).

Ainsi, l'invention consiste essentiellement à réaliser une alimentation en combustible (soit de la vapeur d'eau ou un mélange de vapeur d'eau avec CO2, soit H2 ou CH4) par zones distinctes entre une cellule ou un groupe de cellules empilées et une cellule adjacente ou un groupe de cellules empilées adjacentes au sein d'un même réacteur d'(de co-)électrolyse ou d'une pile à combustible SOFC.

On peut alors réaliser une alimentation/récupération des gaz pour les deux cellules adjacentes ou deux groupes de cellules adjacents soit en parallèle en maintenant les clarinettes séparées l'une de l'autre offrant une alimentation indépendante pour chacun des groupes, soit en série en les reliant l'une à l'autre à l'extérieur de l'empilement.

On peut en outre envisager de réaliser un basculement d'un mode d'alimentation/récupération en parallèle à un mode en série et vice-versa, lors du fonctionnement de l'électrolyseur ou de la pile.

Cela permet une plus grande flexibilité de fonctionnement. En effet, le passage du mode d'alimentation en parallèle à celui en série permet d'augmenter la longueur du canal de réaction pour une même surface active de cellule électrochimique. Cela peut être favorable au reformage interne à plus fort débit par exemple, dans une pile SOFC. Dans le mode en série, on peut apporter un complément en carburant et/ou en comburant (ou gaz drainant) de l'un(e) et/ou l'autre des deux cellules adjacentes ou deux groupes de cellules adjacents.

Le mode en série est avant tout destiné à augmenter l'utilisation de carburant en mode pile de manière à maximiser le rendement.

Mais, le mode en parallèle alimenté de manière indépendante permet par contre une meilleure flexibilité en puissance et une gestion au cours du vieillissement de chacun des empilements.

L'invention proposée permet de passer d'un mode série à un mode parallèle permettant du coup d'optimiser plutôt soit le rendement (série) soit la puissance (parallèle).

Selon l'invention, avec des alimentations/récupérations des gaz combustibles qui sont distinctes, entre une cellule ou un groupe de cellules empilées et une cellule adjacente ou un groupe de cellules empilées adjacentes, on améliore grandement la gestion du fonctionnement thermique et on réduit considérablement les gradients thermiques dans l'empilement de l'électrolyseur ou de la pile combustible SOFC, comparativement à l'état de l'art.

Comme décrit ci-après, les deux distributions des gaz combustibles sur les cellules ou groupes de cellules adjacents peuvent être en co-courant ou à contre-courant l'une de l'autre. Une circulation à contre-courant entre les deux groupes d'interconnecteurs/cellules indépendants permet avantageusement de limiter grandement les gradients thermiques au sein de l'empilement puisque la zone de sortie des gaz d'une cellule ou d'un groupe de cellules est alors située à proximité de l'entrée de la cellule ou groupe adjacent, et inversement.

En outre, on peut envisager une alimentation/récupération des gaz drainant ou comburant qui soit commune aux deux cellules ou groupes de cellules adjacents, ou séparée notamment pour un fonctionnement en mode pile SOFC.

Lorsque l'alimentation/récupération des gaz drainant ou comburant est séparée, leurs distributions sur les cellules ou groupes de cellules adjacents peuvent être à nouveau à contre-courant de manière à réduire encore davantage les gradients thermiques.

Les interconnecteurs envisagés dans le cadre de l'invention permettent de conserver une circulation des gaz sur les cellules à courant croisé entre le combustible et le comburant ou gaz drainant.

Les procédés selon l'invention ne modifient pas la réversibilité d'un réacteur à empilement qui peut être utilisé aussi bien en tant que réacteur d'électrolyse ou co-électrolyse qu'en tant que pile SOFC avec comme combustible de l'hydrogène, ou du méthane.

En résumé, les procédés selon l'invention présentent de nombreuses caractéristiques et avantages, parmi lesquels on peut citer:

- une alimentation/distribution en gaz combustible qui peut être en série ou en parallèle pour deux cellules ou groupes de cellules adjacents par la réalisation de deux clarinettes indépendantes dans l'empilement mais qui peuvent être reliées entre elles à l'extérieur de l'empilement;
- une gestion des fonctionnements thermiques complètement intégrée ;
- dans une alimentation/distribution en série, une augmentation de la longueur du canal de réaction pour une même surface utile de cellule électrochimique, qui peut être favorable aux réactions catalytiques comme le reformage interne à fort débit de $CH_4$ dans une pile SOFC et à l'augmentation du taux d'utilisation.
- un basculement du mode série au mode parallèle possible en cas de vieillissement/endommagement d'un groupe de cellules demandant un pilotage indépendant ;
- dans une alimentation/distribution en série, la possibilité d'enrichir en carburant et/ou en comburant ou gaz drainant la cellule ou groupe de cellules en aval;
- la possibilité d'une circulation des gaz combustible entre deux cellules ou groupes de cellules adjacents à co-courant ou à contre-courant, ce qui permet de réduire fortement les gradients thermiques au sein de l'empilement ;
- la possibilité d'atteindre des points de fonctionnement en électrolyseur ou en pile SOFC inatteignables jusqu'à présent, car conduisant à des gradients thermiques rédhibitoires;
- la possibilité d'avoir un nombre différent de cellules entre deux groupes alimentés en gaz par des clarinettes indépendantes, avec par exemple dans une alimentation d'un groupe avec un nombre de cellules réduit par rapport à celui du deuxième groupe. Les cellules du groupe au nombre réduit peuvent alors être agencées soit toutes uniquement au centre de l'empilement alternativement avec celles du groupe au nombre plus important, soit en étant réparties sur toute la hauteur de l'empilement en alternance avec des cellules du groupe au nombre plus important.

Par «cellule à cathode support », on entend ici et dans le cadre de l'invention la définition déjà donnée dans le domaine de l'électrolyse de l'eau à haute température EHT et désignée sous l'acronyme anglais CSC pour « *Cathode-supported Cell* », c'est-à-dire une cellule dans laquelle l'électrolyte et l'électrode à oxygène (anode) sont disposées sur l'électrode à hydrogène ou à monoxyde de carbone (cathode) plus épaisse qui sert donc de support.

Selon un premier mode de réalisation, l'alimentation des gaz dans la première zone du premier groupe d'interconnecteurs est reliée en série à celle des gaz dans la première zone du deuxième groupe d'interconnecteurs.

Selon ce premier mode, on peut enrichir les gaz en combustible et/ou en comburant entre la sortie du premier groupe et l'entrée du deuxième groupe ou vice-versa.

Avantageusement, on met en oeuvre des cellules de taille différente entre le premier et le deuxième groupe de manière à ce que toutes les cellules soient à la même tension avec des compositions en combustibles différentes. On précise ici qu'il va de osit que les cellules à la même tension ne présentent pas une même densité de courant mais le même courant.

Selon un deuxième mode de réalisation, l'alimentation des gaz dans la première zone du premier interconnecteur est en parallèle de celle des gaz dans la première zone du deuxième interconnecteur.

Selon ce deuxième mode, on peut alimenter le premier et le deuxième groupe avec des compositions et débits en gaz qui sont identiques.

Avantageusement, en mode pile à combustible, on alimente le premier et le deuxième groupes avec des compositions en méthane ($CH_4$) ou hydrogène ($H_2$) différente de sorte à avoir un reformage différent entre les deux groupes.

Avantageusement encore, en co-électrolyse de la vapeur d'eau H2O et du dioxyde de carbone $CO_2$, on alimente le premier et le deuxième groupe avec un même ratio H2O/CO2/CO.

Selon une caractéristique avantageuse, en fonctionnement, on change l'alimentation en série en alimentation en parallèle et selon lequel on rend simultanément les débits et compositions différentes entre les deux groupes de manière à gérer une dégradation prématurée des cellules d'un des deux groupes.

Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :

- - la figure 1 est une vue schématique montrant le principe de fonctionnement d'un electrolyseur d'eau à haute température;
- - la figure 2 est une vue schématique en éclaté d'une partie d'un electrolyseur de vapeur d'eau à haute température comprenant des interconnecteurs selon l'état de l'art,
- - la figure 3 est une vue schématique en coupe d'un réacteur d'électrolyse mettant en oeuvre le procédé d'électrolyse à haute température selon un mode de l'invention,
- - la figure 4 est une vue schématique en coupe d'un réacteur d'électrolyse mettant en oeuvre le procédé d'électrolyse à haute température selon un autre mode de l'invention,
- - la figure 5 est une vue en éclaté d'une partie d'un réacteur d'électrolyse selon l'invention avec des interconnecteurs permettant une alimentation indépendante et circulation en vapeur d'eau à contre-courant d'une cellule d'électrolyse par rapport à celle adjacente,
- - les figures 6A et 6B sont des vues en éclaté de deux interconnecteurs selon l'invention qui permettent une alimentation/récupération de la vapeur d'eau et de l'hydrogène produit, séparée et à co-courant d'une cellule d'électrolyse à une cellule adjacente, et une alimentation/récupération du gaz drainant et de l'oxygène produit, commune entre les deux cellules adjacentes, les figures montrant l'alimentation, la distribution et la récupération de la vapeur d'eau et de l'hydrogène produit,
- - la figure 6C est une vue en éclaté d'un des deux interconnecteurs selon les figures 6A et 6B, montrant l'alimentation, la distribution et la récupération du gaz drainant et de l'oxygène produit,
- - les figures 7A et 7B sont des vues en éclaté de deux interconnecteurs selon l'invention qui permettent une alimentation/récupération de la vapeur d'eau et de l'hydrogène produit, séparée et à contre-courant d'une cellule d'électrolyse à une cellule adjacente, et une alimentation/récupération du gaz drainant et de l'oxygène produit, commune entre les deux cellules adjacentes, les figures montrant l'alimentation, la distribution et la récupération de la vapeur d'eau et de l'hydrogène produit,
- - les figures 8A et 8B sont des vues en éclaté de deux interconnecteurs selon l'invention qui permettent une alimentation/récupération de la vapeur d'eau et de l'hydrogène produit, séparée et à contre-courant d'une cellule d'électrolyse à une cellule adjacente, et une alimentation/récupération du gaz drainant et de l'oxygène produit, également séparée et à contre-courant d'une cellule d'électrolyse à une cellule adjacente,, les figures montrant l'alimentation, la distribution et la récupération de la vapeur d'eau et de l'hydrogène produit,
- - les figures 9A et 9B sont identiques respectivement aux figures 8A et 8B mais montrant l'alimentation, la distribution et la récupération du gaz drainant et de l'oxygène produit,
- - la figure 10 est une vue en perspective d'un interconnecteur selon les figures 7A et 7B,
- - la figure 10A est une vue de face d'une tôle d'extrémité d'un interconnecteur selon la figure 7A, montrant l'alimentation, la distribution et la récupération de la vapeur d'eau et de l'hydrogène produit,
- - la figure 10B est une vue de face d'une tôle d'extrémité d'un interconnecteur selon la figure 7A, montrant l'alimentation, la distribution et la récupération de la vapeur d'eau et de l'hydrogène produit,
- - la figure 10C est une vue de face d'une tôle d'extrémité d'un interconnecteur selon la figure 7B, montrant l'alimentation, la distribution et la récupération du gaz drainant et de l'oxygène produit,
- - les figures 11A et 11B sont des vues de détail d'une partie d'un interconnecteur selon l'invention.

On précise ici que sur l'ensemble des figures 1 à 11B, les symboles et les flèches d'alimentation d'une part de vapeur d'eau $H_2O$, de distribution et de récupération de dihydrogène $H_2$ et d'oxygène $O_2$ et du courant sont montrés à des fins de clarté et de précision, pour illustrer le fonctionnement d'un réacteur d'électrolyse de vapeur d'eau selon l'état de l'art et d'un réacteur d'électrolyse de vapeur d'eau selon l'invention.

On précise également que dans l'ensemble de la demande les termes « dessus », dessous », « à l'aplomb », « vertical », « inférieur », « supérieur », « bas », «haut », sont à comprendre par référence par rapport à un réacteur EHT ou une pile SOFC en configuration verticale en fonctionnement, c'est-à-dire avec les plans d'interconnecteurs et cellules électrochimiques à l'horizontal.

On précise enfin que tous les électrolyseurs décrits sont de type à oxydes solides (SOEC, acronyme anglais de « *Solid Oxyde Electrolysis Cell* ») fonctionnant à haute température. La haute température de fonctionnement d'un électrolyseur (réacteur d'électrolyse) est typiquement comprise entre 600°C et 950°C.

Typiquement, les caractéristiques d'une cellule d'électrolyse élémentaire SOEC convenant à l'invention, du type cathode support (CSC), peuvent être celles indiquées comme suit dans le tableau ci-dessous.

**TABLEAU**

| Cellule d'électrolyse | Unité | Valeur |
|---|---|---|
| **Cathode 2** | | |
| Matériau constitutif | | Ni-YSZ |
| Epaisseur | $\mu$m | 315 |
| Conductivité thermique | W m$^{-1}$ K$^{-1}$ | 13,1 |
| Conductivité électrique | $\Omega^{-1}$ m$^{-1}$ | $10^5$ |
| Porosité | | 0,37 |
| Perméabilité | m$^2$ | $10^{-13}$ |
| Tortuosité | | 4 |
| Densité de courant | A.m$^{-2}$ | 5300 |
| **Anode 4** | | |
| Matériau constitutif | | LSM |
| Epaisseur | $\mu$m | 20 |
| Conductivité thermique | W m$^{-1}$ K$^{-1}$ | 9,6 |
| Conductivité électrique | $\Omega^{-1}$ m$^{-1}$ | $1\ 10^4$ |
| Porosité | | 0,37 |
| Perméabilité | m$^2$ | $10^{-13}$ |
| Tortuosité | | 4 |
| Densité de courant | A.m$^{-2}$ | 2000 |
| **Electrolyte 3** | | |
| Matériau constitutif | | YSZ |
| Epaisseur | $\mu$m | 90$\mu$m en électrolyte support et 5 $\mu$m en électrode support |
| Résistivité | $\Omega$ m | 0,42 |

Les figures 1 et 2 ont déjà été décrites en détail en préambule. Elles ne le sont donc pas ci-après.

Par convention, et afin de faciliter la lecture des circulations des gaz sur les différentes figures, on utilise les symboles suivants :

- EH2(1) : désigne la circulation à travers l'empilement de la vapeur d'eau alimentant une cellule ou un groupe de cellules d'électrolyse C1 ;
- SH2(1) : désigne la circulation à travers l'empilement de l'hydrogène produit à une cellule ou un groupe de cellules d'électrolyse C1 ;
- EH2(2) : désigne la circulation à travers l'empilement de la vapeur d'eau alimentant une cellule ou un groupe de cellules d'électrolyse C2;
- SH2(2) : désigne la circulation à travers l'empilement de l'hydrogène produit à une cellule ou un groupe de cellules d'électrolyse C2 ;
- E1(O$_2$): désigne la circulation à travers l'empilement du gaz drainant alimentant une cellule ou un groupe de cellules d'électrolyse C1 ;
- S1(O$_2$) : désigne la circulation à travers l'empilement de l'oxygène produit à une cellule ou un groupe de cellules d'électrolyse C1 ;
- E2(O$_2$): désigne la circulation à travers l'empilement du gaz drainant alimentant une cellule ou un groupe de cellules d'électrolyse C2;
- S2(O$_2$) : désigne la circulation à travers l'empilement de l'oxygène produit à une cellule ou un groupe de cellules d'électrolyse C2.

Pour améliorer la gestion des fonctionnements thermique du réacteur d'électrolyse et réduire les gradients thermiques en son sein, les inventeurs de la présente invention ont pensé à réaliser une circulation du gaz combustible, i.e. la vapeur d'eau, et de l'hydrogène produit au sein de chaque interconnecteur 5.1, 5.2 de l'empilement, telle que la distribution au niveau d'une cellule C1 ou groupe de cellules soit séparée de celle au niveau d'une cellule C2 ou du groupe de cellules adjacents.

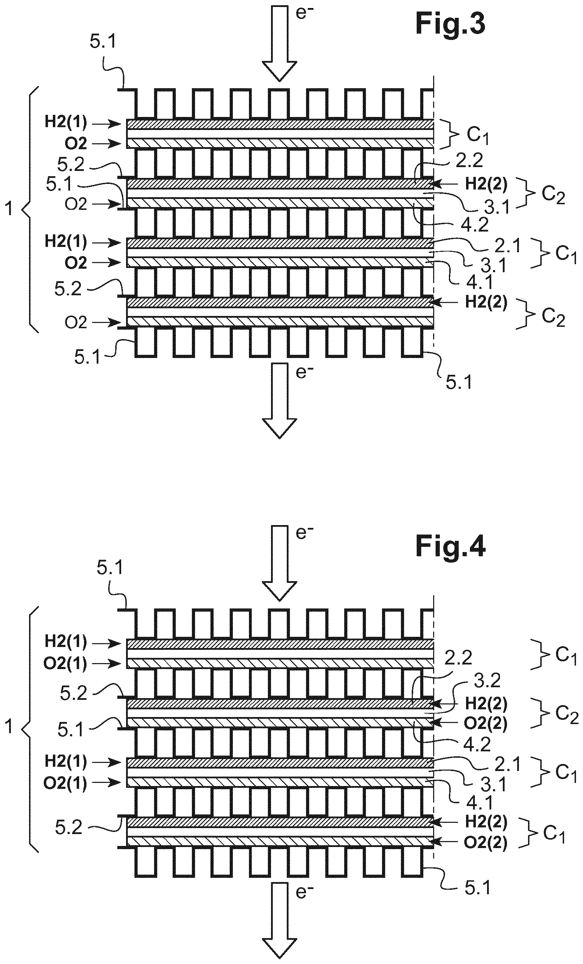

Pour ce faire, comme illustré en figure 3 :

- on alimente de la vapeur d'eau EH2(1) dans une première zone de chaque interconnecteur 5.1 (à gauche sur la figure 3), et on la distribue à une cathode des cellules C1, puis on récupère l'hydrogène H2 produit dans une deuxième zone des interconnecteurs 5.1 (à droite sur la figure 3),
- on alimente de la vapeur d'eau EH2(2) dans une première zone de chaque interconnecteur 5.2, adjacent chacun à un interconnecteur 5.1 (à droite sur la figure 3), et on la distribue à une cathode des cellules C2, adjacente chacune à la cellule C1, puis on récupère l'hydrogène H2 produit dans une deuxième zone des interconnecteurs 5.2 (à gauche sur la figure 3).

Toutes les première et deuxième zones des interconnecteurs 5.2 sont non situées à l'aplomb respectivement des première et deuxième zones des interconnecteurs 5.1.

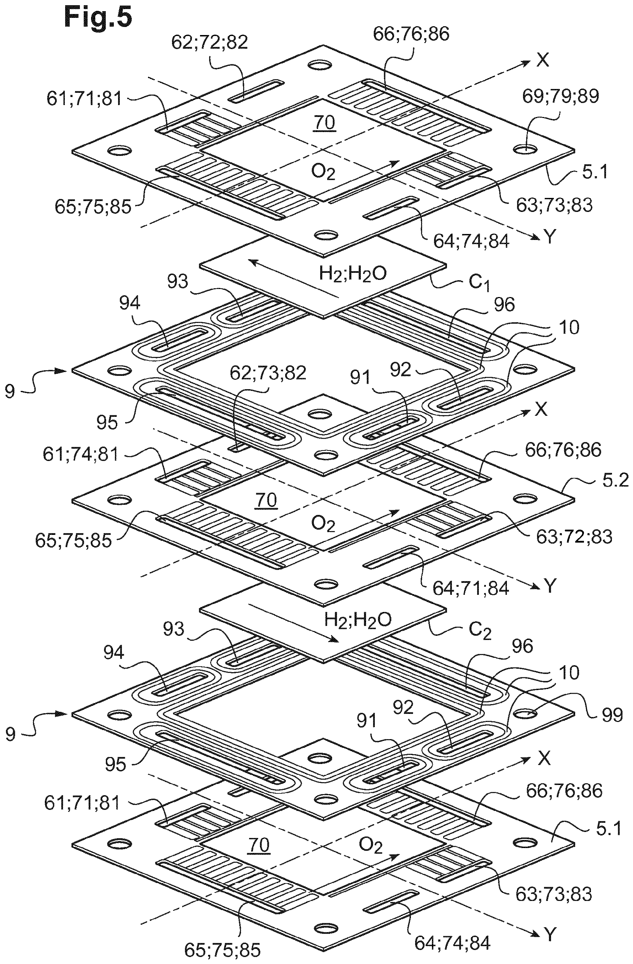

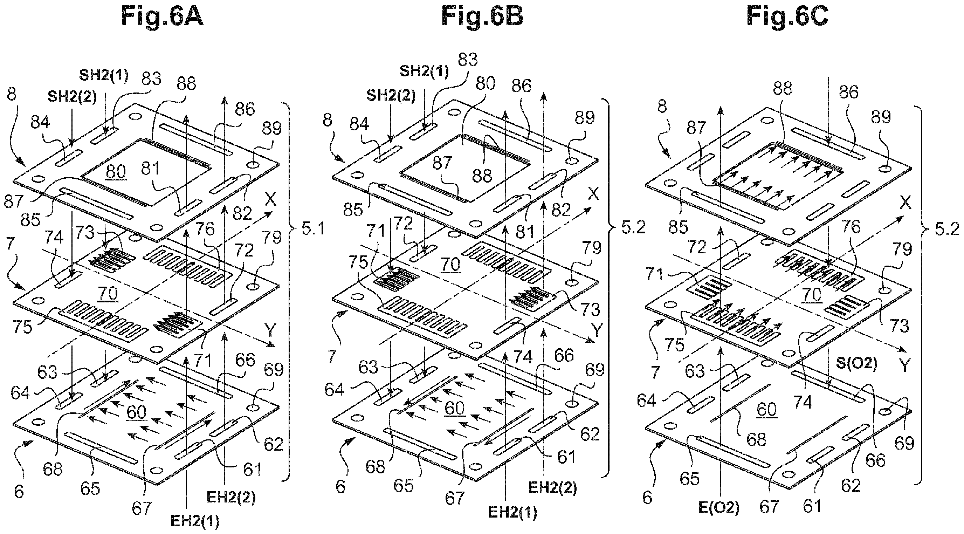

Comme illustré en figures 3 et 5, on peut prévoir une réalisation des interconnecteurs 5.1, 5.2 pour agencer les différentes zones d'alimentation et de récupération de la vapeur d'eau et de l'hydrogène produit de telle sorte que leur circulation au niveau des cellules C1 soit à contre-courant de celle au niveau des cellules C2. Cette circulation peut également être à co-courant, comme illustré en figures 6A et 6B.

Les interconnecteurs 5.1, 5.2 peuvent en outre être réalisés pour agencer les différentes zones d'alimentation et de récupération du gaz drainant et de l'oxygène produit de telle sorte que leur circulation au niveau des cellules C1 soit à co-courant de celle au niveau des cellules C2 (figures 3 et 5) ou à contre-courant (figure 4).

On a représenté de manière schématique en figure 5, une partie d'un électrolyseur haute température à oxydes solides (SOEC) selon l'invention.

Cet électrolyseur comporte un empilement de cellules d'électrolyse élémentaires de type SOEC (C1, C2) formées chacune d'une cathode 2.1, 2.2, d'une anode 4.1, 4.2 et d'un électrolyte 3.1, 3.2, intercalé entre la cathode et l'anode.

Un interconnecteur électrique et fluidique 5.1, 5.2 est agencé entre deux cellules élémentaires adjacentes C1, C2 avec une de ses faces en contact électrique avec l'anode d'une des deux cellules élémentaires et l'autre de ses faces en contact électrique avec la cathode de l'autre des deux cellules élémentaires.

Comme montré en figure 5, on prévoit en outre des cadres d'isolation et d'étanchéité 9 permettant d'assurer l'isolation électrique entre interconnecteurs 5.1 et 5.2. Chaque cadre 9 est percé de lumières 99 adaptées pour loger des tirants de fixation de l'empilement, ainsi que des joints 10 prévus pour réaliser l'étanchéité autour des lumières d'alimentation des gaz en électrolyse ou co-électrolyse H2O, CO2, Air et de récupération des gaz produits H2, CO, O2 avec Air.

L'ensemble des cellules d'électrolyse C1 et C2 sont traversées par le même courant électrique.

Dans le réacteur selon l'invention, tous les compartiments cathodiques 50 du groupe de cellules C1 dans lesquels circulent la vapeur d'eau alimentée H2O et l'hydrogène produit H2 communiquent entre eux. De même, tous les compartiments cathodiques 50 du groupe de cellules C2 dans lesquels circulent aussi H2O/H2 communiquent entre eux, mais sont complètement isolés des compartiments 50 dédié au groupe de cellules C1.

Enfin, les deux réactions d'électrolyse simultanées mais séparées produisent toutes deux de l'oxygène qui est récolté par tous les compartiments anodiques 51 qui communiquent entre eux ou pas. Ainsi, comme cela est détaillé par la suite, en fonction du design des lumières dédiées à l'évacuation de l'oxygène, on peut réaliser une collecte d'oxygène commune à toutes les cellules ou au contraire, une collecte séparée d'une cellule C1 par rapport à l'autre C2 adjacente.

Selon l'invention, un interconnecteur 5.1 est différent d'un interconnecteur 5.2 adjacent afin de pouvoir réaliser une alimentation en vapeur d'eau et une récupération d'hydrogène produit au niveau d'une cellule C1 qui est distincte de celle réalisée au niveau d'une cellule C2.

Ainsi, comme illustré sur la figure 5, la circulation de l'hydrogène/vapeur d'eau à travers l'empilement et au niveau de la cellule C1 est séparée de celle à travers l'empilement et au niveau de la cellule C2.

La figures 6A montre en éclaté un interconnecteur 5.1 selon l'invention permettant s'assurer l'alimentation de vapeur d'eau $H_2O$, la circulation de la vapeur d'eau et de l'hydrogène produit à la cellule C1 ainsi que la récupération de l'oxygène $O_2$ produit au sein de l'empilement d'un réacteur d'électrolyse. Comme détaillé par la suite, l'interconnecteur 5 permet d'assurer une circulation du gaz ($H_2O/H_2$) aux cathodes des cellules à courant croisé à 90° avec la circulation du gaz récupéré (O2 et le gaz drainant à l'anode de la cellule C1).

L'interconnecteur 5.1 est constitué de trois tôles planes 6, 7, 8 allongées selon deux axes de symétrie (X, Y) orthogonaux entre eux, les tôles planes étant stratifiées et assemblées entre elles par soudure. Une tôle centrale 7 est intercalée entre une première 6 et une deuxième 8 tôle d'extrémité.

La première 6 tôle d'extrémité est destinée à venir en contact mécanique avec le plan d'une cathode 2.1 d'une cellule C1 d'électrolyse élémentaire et la tôle centrale 7 est destinée à venir en contact mécanique avec le plan d'une anode 4.1 d'une cellule d'électrolyse élémentaire adjacente, chacune des deux cellules d'électrolyse élémentaires adjacentes (C1, C2) de type SOEC étant formée d'une cathode 2.1, 2.2, d'une anode 4.1, 4.2 et d'un électrolyte 3.1, 3.2 intercalé entre la cathode et l'anode.

Chacune des trois tôles planes 6, 7, 8 comporte une partie centrale 60, 70, 80.

Les parties centrales 60, 70 de la tôle centrale 7 et de la première tôle d'extrémité 6 sont non percée tandis que celle 80 de la deuxième tôle d'extrémité 8 est percée.

Chaque tôle 6, 7, 8 est percée, à la périphérie de sa partie centrale, de six lumières 61, 62, 63, 64, 65, 66 ; 71, 72, 73, 74, 75, 76 ; 81, 82, 83, 84, 85, 86.

Les premières 61, 71, 81 à quatrième 64, 74, 84 lumières de chaque tôle sont allongées sur une longueur correspondant à une partie de la longueur de la partie centrale 60, 70, 80 selon l'un des axes X des tôles et sont réparties deux à deux de part et d'autre dudit axe X.

La cinquième 65, 75, 85 lumière est allongée sur une longueur correspondant sensiblement à la longueur de la partie centrale 60, 70, 80 selon l'autre des axes Y.

La sixième 66, 76, 86 lumière est allongée sur une longueur correspondant sensiblement à la longueur de la partie centrale 60, 70, 80 selon l'autre des axes Y.

La première 6 tôle d'extrémité comporte en outre une septième 67 et huitième 68 lumières agencées symétriquement de part et d'autre de l'axe X, à l'intérieur de ses premières à quatrième lumières 61 à 64, et sont allongées sur une longueur correspondant sensiblement à la longueur de la partie centrale selon l'axe X.

La deuxième 8 tôle d'extrémité comporte en outre une septième 87 lumière et huitième 88 lumière à l'intérieur respectivement de sa cinquième 85 lumière et sa sixième lumière 86, et allongée sur une longueur correspondant sensiblement la longueur de la partie centrale selon ledit axe Y.

Comme visible sur la figure 6A, les première 71, troisième 73, cinquième 75 et sixième 76 lumières de la tôle centrale 7 sont élargies par rapport respectivement aux première 61, 81, troisième 63, 83, cinquième 65, 85 et sixième 66, 86 lumières de chaque tôle d'extrémité 6, 8.

Les deuxièmes 62, 72, 82 et quatrième 64, 74, 84 lumières des trois tôles sont de dimensions sensiblement identiques entre elles.

La stratification et l'assemblage des trois tôles 6, 7, 8 entre elles sont réalisées telles que:

- chacune des première à sixième 61 à 66 lumières de l'une des trois tôles est en communication fluidique individuellement respectivement avec l'une des première à sixième 71 à 76 et 81 à 86 lumières correspondantes des deux autres tôles 7, 8.
- la première lumière 61 de la première 6 tôle d'extrémité est en communication fluidique avec la septième lumière 67 de la première 6 tôle d'extrémité par le biais de la première lumière 71 de la tôle centrale 7,
- la troisième lumière 63 de la première 6 tôle d'extrémité est en communication fluidique avec la huitième lumière 68 de la première 6 tôle d'extrémité par le biais de la troisième lumière 73 de la tôle centrale 7,
- la cinquième 85 et la septième 87 lumières de la deuxième 8 tôle d'extrémité sont en communication fluidique par le biais de la cinquième 75 lumière de la tôle centrale 7,
- la sixième 86 et la huitième 88 lumières de la deuxième 8 tôle d'extrémité sont en communication fluidique par le biais de la sixième 76 lumière de la tôle centrale 7.

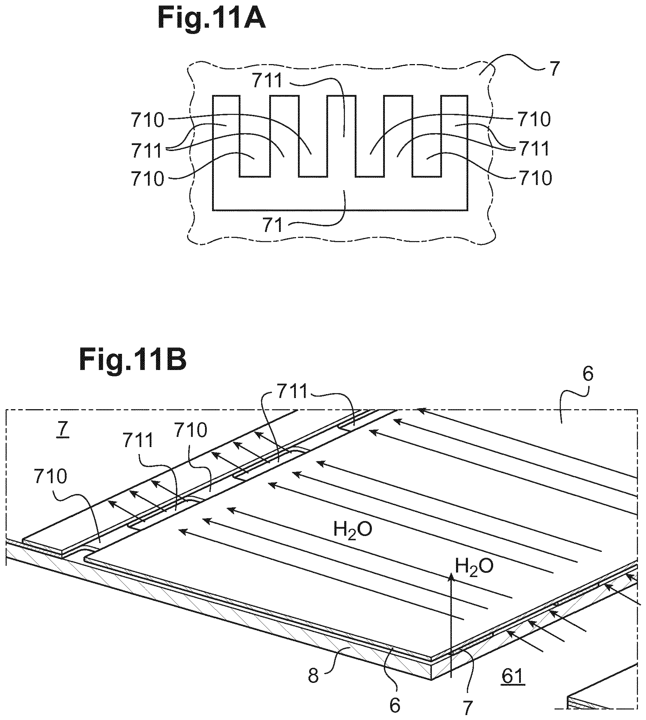

Les figures 11A et 11B montrent en détail la réalisation du peigne formé par les languettes de tôle 710 au niveau de la fente élargie 71 de la tôle centrale et son agencement entre les deux tôles d'extrémité 6, 8 afin de permettre l'alimentation d'une cellule d'électrolyse, ici en vapeur d'eau $H_2O$. Ainsi, le peigne formé 710, 711 permet à la vapeur d'eau de passer de la clarinette d'alimentation 61, 71, 81 à la fente de distribution 67 en passant dans l'espace entre les deux tôles d'extrémité 6, 8. L'épaisseur de la tôle 7 centrale au niveau de ce peigne 710, 711 lui confère une fonction d'entretoise et garantit ainsi la hauteur du passage pour la vapeur d'eau dans l'espace inter-tôles d'extrémité 6, 8. Un tel passage des gaz selon l'invention par l'intérieur de l'interconnecteur 5.1 a pour avantage de libérer une surface plane pour la réalisation des étanchéités. En outre, on obtient grâce à ces formes de peignes pour les fentes élargies 71, 75 une distribution homogène de chaque gaz ($H_2O$, $CO_2$, Air) sur la cellule d'électrolyse, et grâce à ces formes de peigne pour les fentes élargies 73, 76 une récupération du gaz produit ($H_2$, CO, $O_2$). Ces distributions ou récupérations homogènes ou autrement dit uniformes en débit sur la surface de la cellule sont montrées sur les différentes figures 6A à 10C, sous la forme de petites flèches espacées les unes des autres.

Pour réaliser l'interconnecteur 5.2 représenté en figure 6B qui est dédié à l'électrolyse de la vapeur d'eau au niveau de la cellule C2, on utilise les mêmes trois tôles planes 6, 7, 8 que celles utilisées pour la réalisation de l'interconnecteur 5.2 mais en procédant uniquement à un retournement de la tôle centrale 7 dessus-dessous avant sa stratification et l'assemblage avec les deux tôles d'extrémité 6, 8.

Ainsi, dans l'interconnecteur 5.2, les trois tôles 6, 7, 8 sont stratifiées et assemblées entre elles telles que:

- chacune des première à sixième 61 à 66 lumières de l'une des trois tôles est en communication fluidique individuellement respectivement avec l'une des première à sixième 71 à 76 et 81 à 86 lumières correspondantes des deux autres tôles 7, 8,
- la deuxième lumière 62 de la première 6 tôle d'extrémité est en communication fluidique avec la septième 67 lumière de la première 6 tôle d'extrémité par le biais de la troisième 73 lumière de la tôle centrale 7,
- la quatrième lumière 64 de la première 6 tôle d'extrémité est en communication fluidique avec la huitième 68 lumière de la première 6 tôle d'extrémité par le biais de la première 71 lumière de la tôle centrale 7,
- la cinquième 85 et la septième 87 lumières de la deuxième 8 tôle d'extrémité sont en communication fluidique par le biais de la cinquième 75 lumière de la tôle centrale 7,
- la sixième 86 et la huitième 88 lumières de la deuxième 8 tôle d'extrémité sont en communication fluidique par le biais de la sixième 76 lumière de la tôle centrale 7.

On décrit maintenant en référence aux figures 6A et 6B, le procédé de fonctionnement d'un réacteur d'électrolyse selon l'invention tel qu'il vient d'être décrit:
On alimente les premières 61, 71, 81 lumières en vapeur d'eau EH2(1) de l'interconnecteur 5.1 et simultanément mais séparément les deuxièmes 62, 72, 82 lumières de l'interconnecteur 5.1 également en vapeur d'eau EH2(2).

La vapeur d'eau EH2(2) traverse l'interconnecteur 5.1 sans être distribuée à la cathode 2.1 de la cellule C1. Elle alimente les lumières 62, 73, et 82 de l'interconnecteur 5.2.

De même, la vapeur d'eau EH2(1) traverse l'interconnecteur 5.2 sans être distribuée à la cathode 2.2 de la cellule C2.

Le parcours au sein d'un interconnecteur 5.1, de la vapeur d'eau injectée et de l'hydrogène produit est schématisé en figures 6A, 7A et 8A.

Le parcours au sein d'un interconnecteur 5.2 de la vapeur d'eau injectée et de l'hydrogène produit au sein d'un interconnecteur 5.2 est schématisé en figures 6B, 7B et 8B.

En outre, on alimente les cinquième 65, 75, 85 lumières des trois tôles 8 de chaque interconnecteur 5.1, 5.2 par un gaz drainant E(O$_2$), tel que de l'air.

Le parcours de l'air en tant que gaz drainant injecté et de l'oxygène produit au sein d'un interconnecteur 5 est schématisé en figure 6C.

On récupère ainsi l'hydrogène produit SH2(1) par l'électrolyse de la vapeur d'eau au niveau de la cellule C1, dans les troisièmes 63, 73, 83 lumières de l'interconnecteur 5.1 et dans les troisième 63, 83 lumières des tôles d'extrémité et la deuxième lumière 72 de l'interconnecteur 5.2.

On récupère de manière séparée l'hydrogène produit SH2(2) par l'électrolyse de la vapeur d'eau au niveau de la cellule C2, dans les quatrième 64, 84 lumières des tôles d'extrémité et la première lumière 71 de l'interconnecteur 5.2 et dans les quatrièmes 64, 74, 84 lumières de l'interconnecteur 5.1.

Simultanément, on récupère l'oxygène O$_2$ produit S(O$_2$) dans les sixième 66, 76, 86 lumières des trois tôles 8 de chaque interconnecteur 5.1, 5.2.

L'alimentation de la vapeur d'eau et la récupération de l'hydrogène produit ainsi que l'alimentation en gaz drainant et la récupération en oxygène produit montrées aux figures 6A à 6C constitue une circulation en co-courant de combustible d'une cellule C1 par rapport à l'autre C2 adjacente, et à courant croisés avec la circulation de gaz drainant/oxygène produit commune.

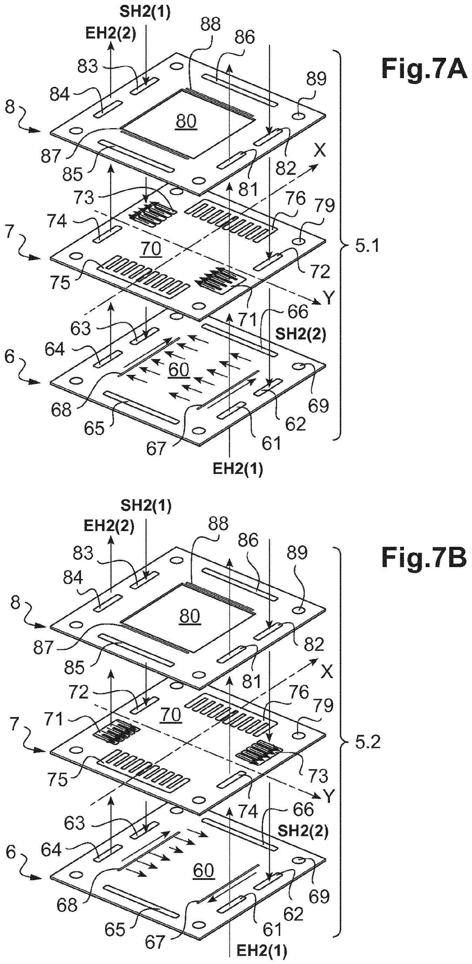

Avec les deux types d'interconnecteurs 5.1, 5.2 on peut aussi réaliser en tant que variante, une circulation à contre-courant de combustible d'une cellule C1 par rapport à l'autre C2 adjacente, et à courant croisés avec la circulation de gaz drainant/oxygène produit commune (figures 7A et 7B).

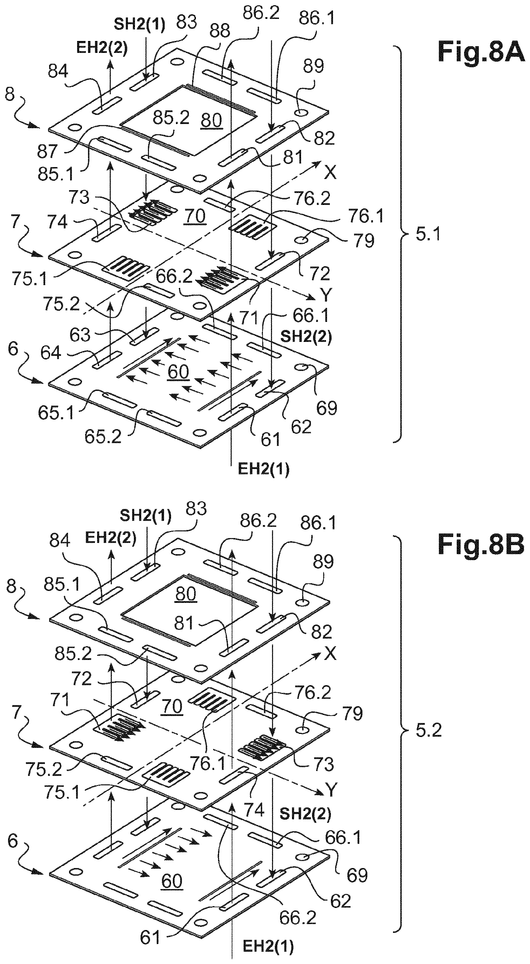

On peut aussi réaliser une circulation en contre-courant de combustible d'une cellule C1 par rapport à l'autre C2 adjacente, et avec la circulation de gaz drainant/oxygène produit et séparée d'une cellule C1 par rapport à l'autre C2 (figures 8A et 8B). Pour réaliser cette circulation de gaz drainant/oxygène produit séparé, il suffit alors de diviser en quelque sorte en deux les lumières 65, 75, 85 d'alimentation en gaz drainant et celles 66, 76, 86 de récupération en oxygène produit.

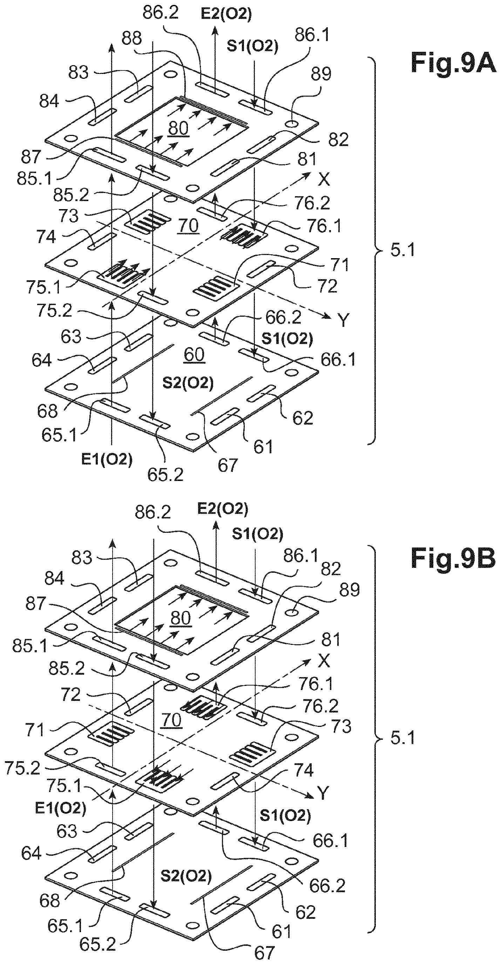

On peut en outre réaliser une circulation de gaz drainant/oxygène produit séparé à contre-courant par rapport aux circulations de gaz drainant/oxygène d'une cellule C1 par rapport à l'autre C2 adjacente. Ainsi, comme illustré en figure 9A, le gaz drainant E1(O2) alimente les lumières 65.1, 75.1, 85.1 de l'interconnecteur 5.1 et l'oxygène produit S1(O2) est récupéré aux lumières 66.1, 76.1, 86.1. Comme illustré en figure 9B, le gaz drainant E2(O2) alimente les lumières 66.2, 76.1, 86.2 de l'interconnecteur 5.2 et l'oxygène produit S2(O2) est récupéré aux lumières 65.2, 75.1, 85.2.

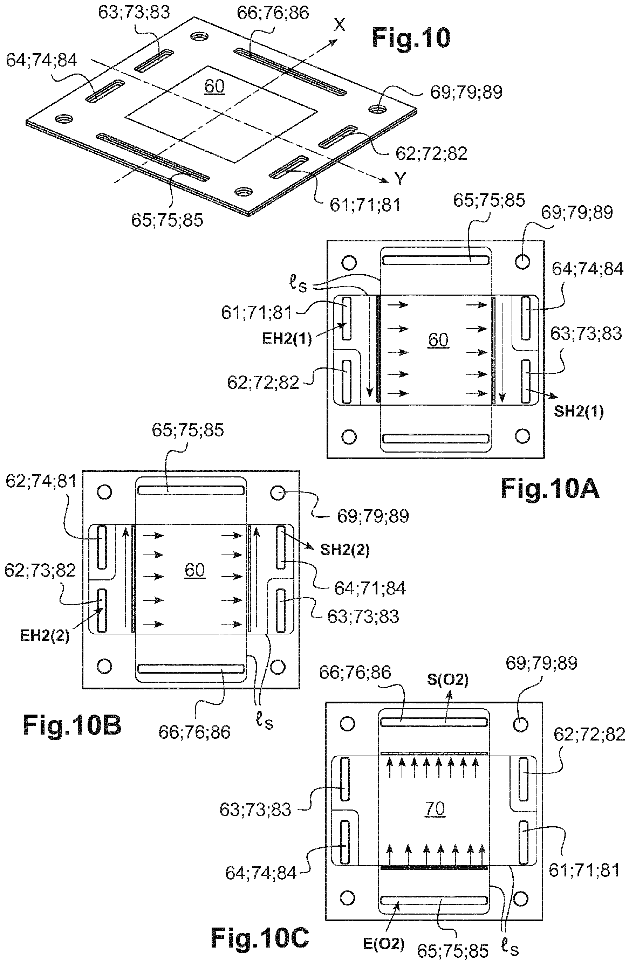

En figure 10, on a représenté en perspective un interconnecteur 5.1 avec des lumières 65, 75, 85 pour une circulation commune en gaz drainant et une récupération commune en oxygène aux lumières 66, 76, 86.

Les trois tôles planes 6, 7, 8 constituant chaque interconnecteur 5.1, 5.2 selon l'invention sont des tôles minces métalliques planes, percées et assemblées entre elles par soudures. De préférence, les tôles minces sont des tôles d'épaisseur inférieure à 3mm, typiquement de l'ordre de 0,2 mm. Toutes les soudures entre tôles sont réalisées à la fabrication, et peuvent être réalisées avantageusement selon une technique de laser par transparence, ce qui est possible du fait de la faible épaisseur des tôles minces, typiquement de l'ordre de 0,2 mm.

Toutes les tôles sont avantageusement en acier ferritique avec de l'ordre de 20% de chrome, de préférence en CROFER® 22APU ou le FT18TNb, AISI 441, ou à base Nickel de type Inconel® 600 ou Haynes® dans des épaisseurs typiquement comprises entre 0,1 et 1 mm.

L'assemblage par lignes de soudures ls autour des lumières entre tôles planes 6, 7, 8 garantit une bonne étanchéité lors du fonctionnement de l'électrolyseur entre la vapeur d'eau EH2(1) amenée aux interconnecteurs 5.1, la vapeur d'eau EH2(2) amenée aux interconnecteurs 5.2, l'hydrogène SH2(1) récupéré aux interconnecteurs 5.1, l'hydrogène SH2(2) récupéré aux interconnecteurs 5.2, le gaz drainant amené E(O2) et l'oxygène S(O2) récupéré. Les lignes de soudures sont illustrées aux figures 10A à 10C.

Tel qu'illustré sur l'ensemble des figures 5 à 10C, les trois tôles 6, 7, 8 sont percées à leur périphérie de lumières supplémentaires 69, 79, 89 adaptées pour loger des tirants de fixation. Ces tirants de fixation permettent d'appliquer une force de maintien à l'empilement des différents composants du réacteur d'électrolyse.

D'autres variantes et améliorations peuvent être envisagées dans le cadre de l'invention.

Si dans les modes de réalisation illustrés, il y a une alternance d'une cellule C1 avec une cellule C2 et donc d'un interconnecteur 5.1 avec un interconnecteur 5.2, on peut aussi prévoir dans le cadre de l'invention qu'un certain nombre de cellules C1 et d'interconnecteurs 5.1 soient empilés et séparé de l'autre partie de ces cellules C1 et interconnecteurs 5.1 par au moins une cellule C2 et un interconnecteur C2. On peut ainsi avoir une imbrication du premier groupe de cellules C1 et interconnecteurs 5.1 avec le deuxième groupe de cellules C2 et interconnecteurs, avec une alternance une à une ou par paquets.

Il va de soi que l'invention englobe la possibilité d'avoir n groupes de cellules C1, C2...Cn et interconnecteurs 5.1, 5.2, ....5.n au sein d'un même empilement avec des clarinettes d'alimentation et de récupération qui sont indépendantes les unes des autres.Les deux cellules C1 et C2 peuvent être alimentées en parallèle si les clarinettes restent indépendantes en amont et en aval de l'empilement ou en série si elles sont raccordées entre elles à l'extérieur de l'empilement. Un complément en combustible et/ou en gaz drainant peut alors être réalisé entre les deux cellules C1, C2 en série.

Tel qu'illustré, des cellules de même nature de type oxydes solides sont empilées pour toutes les cellules C1, C2. Le nombre de cellules par groupe et leur taille respective peut être différente selon l'application: le courant est identique pour toute les cellules, mais le choix d'être à la même tension ou non pour des conditions gaz différentes peut conditionner le ratio de taille de cellules C1 et les cellules C2, ainsi que leur nombre.

## Revendications

1. Procédé d'électrolyse à haute température de la vapeur d'eau $H_2O$, ou de co-électrolyse de la vapeur d'eau $H_2O$ et du dioxyde de carbone $CO_2$, mis en oeuvre dans un réacteur comportant un empilement de cellules d'électrolyse élémentaires (C1, C2) de type à oxydes solides, formées chacune d'une cathode (2.1, 2.2), d'une anode (4.1, 4.2) et d'un électrolyte (3.1, 3.2) intercalé entre la cathode et l'anode, et une pluralité d'interconnecteurs (5.1 ; 5.2) électrique et fluidique agencés chacun entre deux cellules élémentaires (C1, C2) adjacentes avec une de ses faces en contact électrique avec l'anode (4.1) d'une (C1) des deux cellules élémentaires et l'autre de ses faces en contact électrique avec la cathode (2.2) de l'autre (C2) des deux cellules élémentaires, selon lequel:

   - on alimente en vapeur d'eau (EH2(1)) ou en un mélange de vapeur d'eau $H_2O$ et de dioxyde de carbone $CO_2$ une première zone (61, 71, 81) de chaque interconnecteur (5.1) d'un premier groupe et on le distribue à une cathode de chaque cellule élémentaire du premier groupe puis on récupère l'hydrogène $H_2$ produit (SH2(1)) ou le gaz de synthèse (mélange de monoxyde de carbone CO et d'hydrogène $H_2$) dans une deuxième zone (63, 73, 83) de chaque interconnecteur du premier groupe,
   - on alimente en vapeur d'eau (EH2(2)) ou en un mélange la vapeur d'eau $H_2O$ et de dioxyde de carbone $CO_2$ une première zone (62, 73, 82) de chaque interconnecteur (5.2) d'un deuxième groupe dont au moins un est adjacent à un interconnecteur du premier groupe , et on le distribue à une cathode de chaque cellule élémentaire du deuxième groupe, dont au moins une est adjacente à une cellule du premier groupe, puis on récupère l'hydrogène $H_2$ produit (SH2(2)) ou le gaz de synthèse (mélange de monoxyde de carbone CO et d'hydrogène $H_2$) dans une deuxième zone (64, 71, 84) de chaque interconnecteur du deuxième groupe, les première et deuxième zones des interconnecteurs (5.2) du deuxième groupe étant non situées à l'aplomb respectivement des première et deuxième zones des interconnecteurs (5.1) du premier groupe,

procédé selon lequel, au sein de l'empilement, l'alimentation et la circulation respectivement aux interconnecteurs et aux cellules du premier groupe sont réalisées, de manière indépendante par rapport à l'alimentation et la circulation respectivement aux interconnecteurs et aux cellules du deuxième groupe.

2. Procédé d'électrolyse ou de co-électrolyse selon la revendication 1, selon lequel les première et deuxième zones des premier et deuxième groupes d'interconnecteurs sont agencées de sorte que la distribution de la vapeur d'eau ou du mélange de vapeur d'eau $H_2O$ et de dioxyde de carbone $CO_2$, à la cathode des cellules du premier groupe est réalisée à co-courant ou à contre-courant de celle aux cellules du deuxième groupe.

3. Procédé d'électrolyse ou de co-électrolyse selon l'une des revendications 1 ou 2, selon lequel :

- on alimente en gaz drainant, tel que de l'air, (E1(O2)) une troisième zone (65, 75, 85) de chaque interconnecteur (5.1) du premier groupe, et on le distribue à l'anode de chaque cellule du premier groupe, puis on récupère l'oxygène $O_2$ produit et le cas échéant le gaz drainant (S 1(02)) dans une quatrième zone (66,76, 86) de chaque interconnecteur du premier groupe,
- on alimente en gaz drainant, tel que de l'air, (E2(O2)) une troisième zone (65, 75, 85) de chaque interconnecteur (5.2) du deuxième groupe, et on le distribue à l'anode de chaque cellule du deuxième groupe, puis on récupère l'oxygène $O_2$ produit (S2(O2)) et le cas échéant le gaz drainant dans une quatrième zone (66, 76, 86) de chaque interconnecteur du deuxième groupe, les troisième et quatrième zones du deuxième groupe d'interconnecteurs (5.2) étant situées à l'aplomb respectivement des troisième et quatrième zones du premier groupe d'interconnecteurs (5.1), de sorte à avoir une alimentation en gaz drainant et une récupération d'oxygène produit communes aux premier et deuxième groupes.

4. Procédé d'électrolyse ou de co-électrolyse selon l'une des revendications 1 ou 2, selon lequel :

- on alimente en gaz drainant, tel que de l'air, (E1(O2)) une troisième zone (65.1, 75.1, 85.1) de chaque interconnecteur (5.1) du premier groupe, et on le distribue à l'anode de chaque cellule du premier groupe, puis on récupère l'oxygène $O_2$ produit et le cas échéant le gaz drainant (S1(O2)) dans une quatrième zone (66.1, 76.1, 86.1) de chaque interconnecteur du premier groupe,
- on alimente en gaz drainant, tel que de l'air, (E2(O2)) une troisième zone (66.2, 76.1, 86.2) de chaque interconnecteur (5.2) du deuxième groupe et on le distribue à l'anode de chaque cellule du deuxième groupe, puis on récupère l'oxygène $O_2$ produit (S2(O2)) et le cas échéant le gaz drainant dans une quatrième zone (65.2, 75.1, 85.2) de chaque interconnecteur du deuxième groupe, les troisième et quatrième zones du deuxième groupe d'interconnecteurs (5.2) étant non situées à l'aplomb respectivement des troisième et quatrième zones du premier groupe d'interconnecteurs (5.1), de sorte à avoir une alimentation en gaz drainant et une récupération d'oxygène produit séparées entre le premier groupe et le deuxième groupe.

5. Procédé de production d'électricité à haute température, mis en oeuvre dans une pile à combustible à oxydes solides (SOFC) comportant un empilement de cellules électrochimiques élémentaires (C1, C2) de type SOFC, formées chacune d'une cathode (2.1, 2.2) d'une anode (4.1, 4.2) et d'un électrolyte (3.1, 3.2) intercalé entre la cathode et l'anode, et une pluralité d'interconnecteurs (5.1 ; 5.2) électrique et fluidique agencés chacun entre deux cellules élémentaires (C1, C2) adjacentes avec une de ses faces en contact électrique avec l'anode (4.1) d'une (C1) des deux cellules élémentaires et l'autre de ses faces en contact électrique avec la cathode (2.2) de l'autre des deux cellules (C2) élémentaires, selon lequel:

- on alimente en combustible une première zone (61, 71, 81) de chaque interconnecteur (5.1) d'un premier groupe, et on le distribue à une anode de chaque cellule élémentaire du premier groupe, puis on récupère le surplus de combustible et l'eau produite dans une deuxième zone (63, 73, 83) de chaque interconnecteur du premiergroupe,
- on alimente en combustible une première zone (62, 73, 82) de chaque interconnecteur (5.2), d'un deuxième groupe dont au moins un est adjacent à un interconnecteur du premier groupe, et on le distribue à une anode de chaque cellule élémentaire du deuxième groupe dont au moins une est adjacente à une cellule du premier groupe, puis on récupère le surplus de combustible et l'eau produite dans une deuxième zone (64, 71, 84) de chaque interconnecteur du deuxième groupe, les première et deuxième zones des interconnecteurs (5.2) du deuxième groupe étant non situées à l'aplomb respectivement des première et deuxième zones des interconnecteurs (5.1). du premier groupe,

procédé selon lequel, au sein de l'empilement, l'alimentation et la circulation respectivement aux interconnecteurs et aux cellules du premier groupe sont réalisées, de manière indépendante par rapport à l'alimentation et la circulation respectivement aux interconnecteurs et aux cellules du deuxième groupe.

6.  Procédé de production d'électricité à haute température selon la revendication 5, selon lequel les première et deuxième zones des premier et deuxième groupes d'interconnecteurs sont agencées de sorte que la distribution du combustible à l'anode des cellules du premier groupe est réalisée à co-courant ou à contre-courant de celle aux cellules du deuxième groupe.

7.  Procédé de production d'électricité à haute température selon l'une des revendications 5 ou 6, selon lequel :

    - on alimente en comburant, tel que de l'air, (E1(O2)) une troisième zone (65, 75, 85) de chaque interconnecteur (5.1), du premier groupe et on le distribue à la cathode de chaque cellule du premier groupe, puis on récupère le surplus de comburant (S1(O2)) dans une quatrième zone (68, 76, 86) de chaque interconnecteur du premier groupe,
    - on alimente en comburant, tel que de l'air, (E2(O2)) une troisième zone (67, 75, 85) de chaque interconnecteur (5.2) du deuxième groupe, et on le distribue à la cathode de chaque cellule du deuxième groupe, puis on récupère le surplus de comburant (S2(O2)) dans une quatrième zone (68, 76, 86) de chaque interconnecteur du deuxième ,groupe, les troisième et quatrième zones du deuxième groupe d'interconnecteurs (5.2) étant situées à l'aplomb respectivement des troisième et quatrième zones du premier groupe d'interconnecteurs (5.1), de sorte à avoir une alimentation en comburant et une récupération de surplus de comburant communes aux premier et deuxième groupes.

8.  Procédé de production d'électricité à haute température selon l'une des revendications 5 ou 6, selon lequel :

    - on alimente en comburant, tel que de l'air, (E1(O2)) une troisième zone (65.1, 75.1, 85.1) de chaque interconnecteur (5.1), du premier groupe, et on le distribue à la cathode de chaque cellule du premier groupe, puis on récupère le surplus de comburant (Sl(02)) dans une quatrième zone (66.1, 76.1, 86.1) de chaque interconnecteur du premier groupe,
    - on alimente en comburant, tel que de l'air, (E2(O2)) une troisième zone (66.2, 76.1, 86.2) de chaque interconnecteur (5.2), du deuxième groupe, et on le distribue à la cathode de chaque cellule du deuxième groupe, puis on récupère le surplus de comburant (S2(O2)) dans une quatrième zone (65.2, 75.1, 85.2) de chaque interconnecteur du deuxième groupe, les troisième et quatrième zones du deuxième groupe d'interconnecteurs (5.2) étant non situées à l'aplomb respectivement des troisième et quatrième zones du premier groupe d'interconnecteurs (5.1), de sorte à avoir une alimentation en comburant et une récupération de surplus de comburant séparées entre le premier groupe et le deuxième groupe.

9.  Procédé de production d'électricité à haute température selon la revendication 8, selon lequel les troisième et quatrième zones des premier et deuxième groupe d'interconnecteurs sont agencées de sorte que la distribution du comburant à la cathode des cellules du premier groupe est réalisée à contre-courant de celle des cellules du deuxième groupe.

10. Procédé de production d'électricité à haute température selon l'une des revendications 5 à 9, le combustible étant l'hydrogène ou le méthane ($CH_4$), ou un mélange des deux.

11. Procédé d'électrolyse à haute température de la vapeur d'eau $H_2O$, ou de co-électrolyse de la vapeur d'eau $H_2O$ et du dioxyde de carbone $CO_2$, selon l'une des revendications 1 à 4, et procédé de production d'électricité à haute température selon l'une des revendications 5 à 10, selon lequel l'alimentation des gaz dans la première zone du premier groupe d'interconnecteurs est reliée en série à celle des gaz dans la première zone du deuxième groupe d'interconnecteurs,
    et selon lequel, de préférence, on enrichit les gaz en combustible et/ou en comburant entre la sortie du premier groupe et l'entrée du deuxième groupe ou vice-versa.

12. Procédé selon la revendication 11, selon lequel on met en oeuvre des cellules de taille différente entre le premier et le deuxième groupes, de manière à ce que toutes les cellules soient à la même tension avec des compositions en combustibles différentes.

13. Procédé d'électrolyse à haute température de la vapeur d'eau $H_2O$, ou de co-électrolyse de la vapeur d'eau $H_2O$

et du dioxyde de carbone $CO_2$, selon l'une des revendications 1 à 4, et procédé de production d'électricité à haute température selon l'une des revendications 5 à 10, selon lequel l'alimentation du gaz dans la première zone du premier interconnecteur est en parallèle de celle du gaz dans la première zone du deuxième interconnecteur.

**14.** Procédé de co-électrolyse de la vapeur d'eau H2O et du dioxyde de carbone $CO_2$ selon la revendication 13, selon lequel on alimente le premier et le deuxième groupe avec un même ratio $H_2O/CO_2/CO$.

**15.** Procédé selon l'une des revendications 11 à 14, selon lequel en fonctionnement, on change l'alimentation en série en alimentation en parallèle et selon lequel on rend simultanément les débits et compositions différentes entre les deux groupes de manière à gérer une dégradation prématurée des cellules d'un des deux groupes.

**Patentansprüche**

**1.** Verfahren zur Hochtemperatur-Elektrolyse von Wasserdampf $H_2O$ oder Co-Elektrolyse von Wasserdampf $H_2O$ und Kohlendioxid $CO_2$, das in einem Reaktor umgesetzt wird, der einen Stapel von Elementarelektrolysezellen (C1, C2) vom Typ der Festoxid-Elektrolysezellen, die jeweils aus einer Kathode (2.1, 2.2), einer Anode (4.1, 4.2) und einem Elektrolyten (3.1, 3.2), der zwischen der Kathode und der Anode angeordnet ist, gebildet sind, und mehrere elektrische und fluidische Zwischenverbinder (5.1; 5.2) aufweist, die jeweils zwischen zwei benachbarten Elementarzellen (C1, C2) angeordnet sind, wobei eine ihrer Flächen in elektrischem Kontakt mit der Anode (4.1) einer (C1) der zwei Elementarzellen und die andere ihrer Flächen in elektrischem Kontakt mit der Kathode (2.2) der anderen (C2) der zwei Elementarzellen steht, wobei:

- einem ersten Bereich (61, 71, 81) von jedem Zwischenverbinder (5.1) einer ersten Gruppe Wasserdampf (EH2(1)) oder eine Mischung aus Wasserdampf $H_2O$ und Kohlendioxid $CO_2$ zugeführt wird und auf einer Kathode jeder Elementarzelle der ersten Gruppe verteilt wird und dann der erzeugte Wasserstoff $H_2$ (SH2(1)) oder das Synthesegas (Gemisch aus Kohlenmonoxid CO und Wasserstoff $H_2$) in einem zweiten Bereich (63, 73, 83) jedes Zwischenverbinders der ersten Gruppe zurückgewonnen wird,
- einem ersten Bereich (62, 73, 82) von jedem Zwischenverbinder (5.2) einer zweiten Gruppe, wovon mindestens einer angrenzend an einen Zwischenverbinder der ersten Gruppe ist, Wasserdampf (EH2(2)) oder eine Mischung aus Wasserdampf $H_2O$ und Kohlendioxid $CO_2$ zugeführt wird und auf einer Kathode jeder Elementarzelle der zweiten Gruppe verteilt wird, wovon mindestens eine angrenzend an eine Zelle der ersten Gruppe ist, und dann der erzeugte Wasserstoff $H_2$ (SH2(2)) oder das Synthesegas (Gemisch aus Kohlenmonoxid CO und Wasserstoff $H_2$) in einem zweiten Bereich (64, 71, 84) jedes Zwischenverbinders der zweiten Gruppe zurückgewonnen wird, wobei der erste und der zweite Bereich der Zwischenverbinder (5.2) der zweiten Gruppe jeweils nicht senkrecht zu dem ersten und dem zweiten Bereich der Zwischenverbinder (5.1) der ersten Gruppe angeordnet sind,

Verfahren, wobei in dem Stapel das Zuführen und das Umlaufen jeweils an den Zwischenverbindern und an den Zellen der ersten Gruppe unabhängig in Bezug auf das Zuführen und das Umlaufen jeweils an den Zwischenverbindern und an den Zellen der zweiten Gruppe durchgeführt werden.

**2.** Verfahren zur Elektrolyse oder zur Co-Elektrolyse nach Anspruch 1, wobei der erste und zweite Bereich der ersten und zweiten Gruppe der Zwischenverbinder derart ausgebildet sind, dass die Verteilung des Wasserdampfs oder der Mischung aus Wasserdampf $H_2O$ und Kohlendioxid $CO_2$ an der Kathode der Zellen der ersten Gruppe im Gleichstrom oder im Gegenstrom zu jener der Zellen der zweiten Gruppe durchgeführt wird.

**3.** Verfahren zur Elektrolyse oder zur Co-Elektrolyse nach der Ansprüche 1 oder 2, wobei:

- einem dritten Bereich (65, 75, 85) von jedem Zwischenverbinder (5.1) der ersten Gruppe Entleerungsgas wie Luft (E1(O2)) zugeführt wird und auf der Anode jeder Zelle der ersten Gruppe verteilt wird und dann der erzeugte Sauerstoff $O_2$ und gegebenenfalls das Entleerungsgas (S1(O2)) in einem vierten Bereich (66, 76, 86) jedes Zwischenverbinders der ersten Gruppe zurückgewonnen wird,
- einem dritten Bereich (65, 75, 85) von jedem Zwischenverbinder (5.2) der zweiten Gruppe Entleerungsgas wie Luft (E2(O2)) zugeführt wird und auf der Anode jeder Zelle der zweiten Gruppe verteilt wird und dann der erzeugte Sauerstoff $O_2$ (S2(O2)) und gegebenenfalls das Entleerungsgas in einem vierten Bereich (66, 76, 86) jedes Zwischenverbinders der zweiten Gruppe zurückgewonnen wird, wobei der dritte und der vierte Bereich der zweiten Gruppe von Zwischenverbindern (5.2) jeweils senkrecht zu dem dritten und dem vierten Bereich der ersten Gruppe von Zwischenverbindern (5.1) derart angeordnet sind, um eine Zufuhr von Entleerungsgas und eine Zurückgewinnung von erzeugtem Sauerstoff aufzuweisen, die der ersten und zweiten Gruppe gemeinsam sind.

4. Verfahren zur Elektrolyse oder zur Co-Elektrolyse nach einem der Ansprüche 1 oder 2, wobei:

- einem dritten Bereich (65.1, 75.1, 85.1) von jedem Zwischenverbinder (5.1) der ersten Gruppe Entleerungsgas wie Luft (E1(O2)) zugeführt wird und auf der Anode jeder Zelle der ersten Gruppe verteilt wird und dann der erzeugte Sauerstoff $O_2$ und gegebenenfalls das Entleerungsgas (S1(O2)) in einem vierten Bereich (66.1, 76.1, 86.1) jedes Zwischenverbinders der ersten Gruppe zurückgewonnen wird,
- einem dritten Bereich (66.2, 76.1, 86.2) von jedem Zwischenverbinder (5.2) der zweiten Gruppe Entleerungsgas wie Luft (E2(O2)) zugeführt wird und auf der Anode jeder Zelle der zweiten Gruppe verteilt wird und dann der erzeugte Sauerstoff $O_2$ (S2(O2)) und gegebenenfalls das Entleerungsgas in einem vierten Bereich (65.2, 75.1, 85.2) jedes Zwischenverbinders der zweiten Gruppe zurückgewonnen wird, wobei der dritte und der vierte Bereich der zweiten Gruppe von Zwischenverbindern (5.2) jeweils senkrecht zu dem dritten und dem vierten Bereich der ersten Gruppe von Zwischenverbindern (5.1) derart angeordnet sind, um eine Zufuhr von Entleerungsgas und eine Zurückgewinnung von erzeugtem Sauerstoff aufzuweisen, die zwischen der ersten und der zweiten Gruppe getrennt sind.

5. Verfahren zur Hochtemperatur-Stromerzeugung, das in einer Festoxid-Brennstoffzelle (SOFC) umgesetzt wird, die einen Stapel von elektrochemischen Elementarzellen (C1, C2) vom Typ der SOFC-Zellen, die jeweils aus einer Kathode (2.1, 2.2), einer Anode (4.1, 4.2) und einem Elektrolyten (3.1, 3.2), der zwischen der Kathode und der Anode angeordnet ist, gebildet sind, und mehrere elektrische und fluidische Zwischenverbinder (5.1; 5.2) aufweist, die jeweils zwischen zwei benachbarten Elementarzellen (C1, C2) angeordnet sind, wobei eine ihrer Flächen in elektrischem Kontakt mit der Anode (4.1) einer (C1) der zwei Elementarzellen und die andere ihrer Flächen in elektrischem Kontakt mit der Kathode (2.2) der anderen (C2) der zwei Elementarzellen steht, wobei:

- einem ersten Bereich (61, 71, 81) von jedem Zwischenverbinder (5.1) einer ersten Gruppe Brennstoff zugeführt wird und auf der Anode jeder elementaren Zelle der ersten Gruppe verteilt wird und dann der Überschuss an Brennstoff und das erzeugte Wasser in einem zweiten Bereich (63, 73, 83) jedes Zwischenverbinders der ersten Gruppe zurückgewonnen wird,
- einem ersten Bereich (62, 73, 82) von jedem Zwischenverbinder (5.2) einer zweiten Gruppe, wovon mindestens einer angrenzend an einen Zwischenverbinder der ersten Gruppe ist, Brennstoff zugeführt wird und auf einer Anode jeder Elementarzelle der zweiten Gruppe verteilt wird, wovon mindestens eine angrenzend an eine Zelle der ersten Gruppe ist, und dann der Überschuss an Brennstoff und das erzeugte Wasser in einem zweiten Bereich (64, 71, 84) jedes Zwischenverbinders der zweiten Gruppe zurückgewonnen wird, wobei der erste und der zweite Bereich der Zwischenverbinder (5.2) der zweiten Gruppe jeweils nicht senkrecht zu dem ersten und dem zweiten Bereich der Zwischenverbinder (5.1) der ersten Gruppe angeordnet sind,

Verfahren, wobei in dem Stapel das Zuführen und das Umlaufen jeweils an den Zwischenverbindern und an den Zellen der ersten Gruppe unabhängig in Bezug auf das Zuführen und das Umlaufen jeweils an den Zwischenverbindern und an den Zellen der zweiten Gruppe durchgeführt werden.

6. Verfahren zur Hochtemperatur-Stromerzeugung nach Anspruch 5, wobei der erste und zweite Bereich der ersten und zweiten Gruppe der Zwischenverbinder derart ausgebildet sind, dass die Verteilung des Brennstoffs an der Anode der Zellen der ersten Gruppe im Gleichstrom oder im Gegenstrom zu jener der Zellen der zweiten Gruppe durchgeführt wird.

7. Verfahren zur Hochtemperatur-Stromerzeugung nach einem der Ansprüche 5 oder 6, wobei:

- einem dritten Bereich (65, 75, 85) von jedem Zwischenverbinder (5.1) der ersten Gruppe Oxidationsmittel wie Luft (E1(O2)) zugeführt wird und auf der Kathode jeder Zelle der ersten Gruppe verteilt wird und dann der Überschuss an Oxidationsmittel (S1(O2)) in einem vierten Bereich (68, 76, 86) jedes Zwischenverbinders der ersten Gruppe zurückgewonnen wird,
- einem dritten Bereich (67, 75, 85) von jedem Zwischenverbinder (5.2) der zweiten Gruppe Oxidationsmittel wie Luft (E2(O2)) zugeführt wird und auf der Kathode jeder Zelle der zweiten Gruppe verteilt wird und dann der Überschuss an Oxidationsmittel (S2(O2)) in einem vierten Bereich (68, 76, 86) jedes Zwischenverbinders der zweiten Gruppe zurückgewonnen wird, wobei der dritte und der vierte Bereich der zweiten Gruppe von Zwischenverbindern (5.2) jeweils senkrecht zu dem dritten und dem vierten Bereich der ersten Gruppe von Zwischenverbindern (5.1) derart angeordnet sind, um eine Zufuhr von Oxidationsmittel und eine Zurückgewinnung des Überschusses an Oxidationsmittel aufzuweisen, die der ersten und zweiten Gruppe gemeinsam sind.

8. Verfahren zur Hochtemperatur-Stromerzeugung nach einem der Ansprüche 5 oder 6, wobei:

- einem dritten Bereich (65.1, 75.1, 85.1) von jedem Zwischenverbinder (5.1) der ersten Gruppe Oxidationsmittel wie Luft (E1(O2)) zugeführt wird und auf der Kathode jeder Zelle der ersten Gruppe verteilt wird und dann der Überschuss an Oxidationsmittel (S1(O2)) in einem vierten Bereich (66.1, 76.1, 86.1) jedes Zwischenverbinders der ersten Gruppe zurückgewonnen wird,
- einem dritten Bereich (66.2, 76.1, 86.2) von jedem Zwischenverbinder (5.2) der zweiten Gruppe Oxidationsmittel wie Luft (E2(O2)) zugeführt wird und auf der Kathode jeder Zelle der zweiten Gruppe verteilt wird und dann der Überschuss an Oxidationsmittel (S2(O2)) in einem vierten Bereich (65.2, 75.1, 85.2) jedes Zwischenverbinders der zweiten Gruppe zurückgewonnen wird, wobei der dritte und der vierte Bereich der zweiten Gruppe von Zwischenverbindern (5.2) jeweils nicht senkrecht zu dem dritten und dem vierten Bereich der ersten Gruppe von Zwischenverbindern (5.1) derart angeordnet sind, um eine Zufuhr von Oxidationsmittel und eine Zurückgewinnung des Überschusses an Oxidationsmittel aufzuweisen, die zwischen der ersten und zweiten Gruppe getrennt sind.

9. Verfahren zur Hochtemperatur-Stromerzeugung nach Anspruch 8, wobei der dritte und vierte Bereich der ersten und zweiten Gruppe der Zwischenverbinder derart ausgebildet sind, dass die Verteilung des Oxidationsmittels an der Kathode der Zellen der ersten Gruppe im Gleichstrom oder im Gegenstrom zu jener der Zellen der zweiten Gruppe durchgeführt wird.

10. Verfahren zur Hochtemperatur-Stromerzeugung nach einem der Ansprüche 5 bis 9, wobei der Brennstoff Wasserstoff oder Methan ($CH_4$) oder eine Mischung aus beiden ist.

11. Verfahren zur Hochtemperatur-Elektrolyse von Wasserdampf $H_2O$ oder Co-Elektrolyse von Wasserdampf $H_2O$ und Kohlendioxid $CO_2$ nach einem der Ansprüche 1 bis 4 und Verfahren zur Hochtemperatur-Stromerzeugung nach einem der Ansprüche 5 bis 10, wobei die Zufuhr der Gase in den ersten Bereich der ersten Gruppe von Zwischenverbindern mit jener der Gase in den ersten Bereich der zweiten Gruppe von Zwischenverbindern in Reihe geschaltet ist, und wobei die Gase vorzugsweise mit Brennstoff und/oder Oxidationsmittel zwischen dem Ausgang der ersten Gruppe und dem Eingang der zweiten Gruppe und umgekehrt angereichert werden.

12. Verfahren nach Anspruch 11, wobei Zellen von unterschiedlicher Größe zwischen der ersten und der zweiten Gruppe derart eingesetzt werden, dass alle Zellen mit verschiedenen Brennstoffzusammensetzungen die gleiche Spannung aufweisen.

13. Verfahren zur Hochtemperatur-Elektrolyse von Wasserdampf $H_2O$ oder Co-Elektrolyse von Wasserdampf $H_2O$ und Kohlendioxid $CO_2$ nach einem der Ansprüche 1 bis 4 und Verfahren zur Hochtemperatur-Stromerzeugung nach einem der Ansprüche 5 bis 10, wobei die Zufuhr der Gase in den ersten Bereich des ersten Zwischenverbinders zu jener der Gase in den ersten Bereich des zweiten Zwischenverbinders parallel geschaltet ist.

14. Verfahren zur Co-Elektrolyse von Wasserdampf $H_2O$ und Kohlendioxid $CO_2$ nach Anspruch 13, wobei der ersten und der zweiten Gruppe ein gleiches Verhältnis an $H_2O/CO_2/CO$ zugeführt wird.

15. Verfahren nach einem der Ansprüche 11 bis 14, wobei im Betrieb die Reihenzufuhr in Parallelzufuhr geändert wird und wobei gleichzeitig die Durchflüsse und die verschiedenen Zusammensetzungen zwischen den zwei Gruppen derart gestaltet werden, um gegen eine vorzeitige Verschlechterung der Zellen von einer der zwei Gruppen anzukämpfen.

**Claims**

1. A method for the high-temperature electrolysis of steam $H_2O$, or for the co-electrolysis of steam $H_2O$ and of carbon dioxide $CO_2$, implemented in a reactor comprising a stack of individual electrolysis cells (C1, C2) of solid oxide type, each formed of a cathode (2.1, 2.2), of an anode (4.1, 4.2) and of an electrolyte (3.1, 3.2) inserted between the cathode and the anode, and a plurality of electrical and fluid interconnectors (5.1; 5.2) each arranged between two adjacent individual cells (C1, C2) with one face thereof in electrical contact with the anode (4.1) of one (C1) of the two individual cells and the other face thereof in electrical contact with the cathode (2.2) of the other (C2) of the two individual cells, according to which:

- a first zone (61, 71, 81) of each interconnector (5.1) of a first group is supplied with steam (EH2(1)) or with a mixture of steam $H_2O$ and of carbon dioxide $CO_2$, and it is distributed to a cathode of each individual cell of the first group, then the hydrogen $H_2$ produced (SH2(1)) or the synthesis gas (mixture of carbon monoxide CO and of hydrogen $H_2$) is recovered in a second zone (63, 73, 83) of each interconnector of the first group,

- a first zone (62, 73, 82) of each interconnector (5.2) of a second group, at least one of which is adjacent to an interconnector of the first group, is supplied with steam (EH2(2)) or with a mixture of steam $H_2O$ and of carbon dioxide $CO_2$, and it is distributed to a cathode of each individual cell of the second group, at least one of which is adjacent to a cell of the first group, then the hydrogen $H_2$ produced (SH2(2)) or the synthesis gas (mixture of carbon monoxide CO and of hydrogen $H_2$) is recovered in a second zone (64, 71, 84) of each interconnector of the second group, the first and second zones of the interconnectors (5.2) of the second group not being located vertically in line respectively with the first and second zones of the interconnectors (5.1) of the first group,

according to which method, within the stack, the supply and the circulation respectively to the interconnectors and to the cells of the first group are carried out independently relative to the supply and circulation respectively to the interconnectors and to the cells of the second group.

2. The method for electrolysis or co-electrolysis as claimed in claim 1, according to which the first and second zones of the first and second groups of interconnectors are arranged such that the distribution of the steam or of the mixture of steam $H_2O$ and of carbon dioxide $CO_2$ to the cathode of the cells of the first group is carried out in co-current to the distribution to the cells of the second group.

3. The method for electrolysis or co-electrolysis as claimed in claim 1 or 2, according to which the first and second zones of the first and second groups of interconnectors are arranged such that the distribution of the steam or of the mixture of steam $H_2O$ and of carbon dioxide $CO_2$ to the cathode of the cells of the first group is carried out in counter-current to the distribution to the cells of the second group.

4. The method for electrolysis or co-electrolysis as claimed in claim 1 or 2, according to which:

- a third zone (65.1, 75.1, 85.1) of each interconnector (5.1) of the first group is supplied with draining gas such as air (E1(O2)), and it is distributed to the anode of each cell of the first group, then the oxygen $O_2$ produced and, where appropriate, the draining gas (S1(O2)) is (are) recovered in a fourth zone (66.1, 76.1, 86.1) of each interconnector of the first group,

- a third zone (66.2, 76.1, 86.2) of each interconnector (5.2) of the second group is supplied with draining gas such as air (E2(O2)), and it is distributed to the anode of each cell of the second group, then the oxygen $O_2$ produced (S2(O2)) and, where appropriate, the draining gas is (are) recovered in a fourth zone (65.2, 75.1, 85.2) of each interconnector of the second group, the third and fourth zones of the second group of interconnectors (5.2) not being located vertically in line respectively with the third and fourth zones of the first group of interconnectors (5.1), so as to have a supply of draining gas and a recovery of oxygen produced which are separate between the first group and the second group.

5. A method for producing electricity at high temperature, implemented in a solid oxide fuel cell (SOFC) comprising a stack of individual electrochemical cells (C1, C2) of SOFC type, each formed of a cathode (2.1, 2.2), of an anode (4.1, 4.2) and of an electrolyte (3.1, 3.2) inserted between the cathode and the anode, and a plurality of electrical and fluid interconnectors (5.1; 5.2) each arranged between two adjacent individual cells (C1, C2) with one face thereof in electrical contact with the anode (4.1) of one (C1) of the two individual cells and the other face thereof in electrical contact with the cathode (2.2) of the other (C2) of the two individual cells, according to which:

- a first zone (61, 71, 81) of each interconnector (5.1) of a first group is supplied with fuel, and it is distributed to an anode of each individual cell of the first group, then the surplus fuel and the water produced are recovered in a second zone (63, 73, 83) of each interconnector of the first group,

- a first zone (62, 73, 82) of each interconnector (5.2) of a second group, at least one of which is adjacent to an interconnector of the first group, is supplied with fuel, and it is distributed to an anode of each individual cell of the second group, at least one of which is adjacent to a cell of the first group, then the surplus fuel and the water produced are recovered in a second zone (64, 71, 84) of each interconnector of the second group, the first and

# EP 3 335 264 B1

second zones of the interconnectors (5.2) of the second group not being located vertically in line respectively with the first and second zones of the interconnectors (5.1) of the first group,

according to which method, within the stack, the supply and the circulation respectively to the interconnectors and to the cells of the first group are carried out independently relative to the supply and circulation respectively to the interconnectors and to the cells of the second group.

6. The method for producing electricity at high temperature as claimed in claim 5, according to which the first and second zones of the first and second groups of interconnectors are arranged such that the distribution of the fuel to the anode of the cells of the first group is carried out in co-current or in counter-current to the distribution to the cells of the second group.

7. The method for producing electricity at high temperature as claimed in one of claims 5 or 6, according to which:

- a third zone (65, 75, 85) of each interconnector (5.1) of the first group is supplied with oxidizer such as air (E1(O2)), and it is distributed to the cathode of each cell of the first group, then the surplus oxidizer (S1(O2)) is recovered in a fourth zone (68, 76, 86) of each interconnector of the first group,
- a third zone (67, 75, 85) of each interconnector (5.2) of the second group is supplied with oxidizer such as air (E2(O2)), and it is distributed to the cathode of each cell of the second group, then the surplus oxidizer (S2(O2)) is recovered in a fourth zone (68, 76, 86) of each interconnector of the second group, the third and fourth zones of the second group of interconnectors (5.2) being located vertically in line respectively with the third and fourth zones of the first group of interconnectors (5.1), so as to have a supply of oxidizer and a recovery of surplus oxidizer which are common to the first and second groups.

8. The method for producing electricity at high temperature as claimed in one of claim 5 or 6, according to which:

- a third zone (65.1, 75.1, 85.1) of each interconnector (5.1) of the first group is supplied with oxidizer such as air (E1(O2)), and it is distributed to the cathode of each cell of the first group, then the surplus oxidizer (S1(O2)) is recovered in a fourth zone (66.1, 76.1, 86.1) of each interconnector of the first group,
- a third zone (66.2, 76.1, 86.2) of each interconnector (5.2) of the second group is supplied with oxidizer such as air (E2(O2)), and it is distributed to the cathode of each cell of the second group, then the surplus oxidizer (S2(O2)) is recovered in a fourth zone (65.2, 75.1, 85.2) of each interconnector of the second group, the third and fourth zones of the second group of interconnectors (5.2) not being located vertically in line respectively with the third and fourth zones of the first group of interconnectors (5.1), so as to have a supply of oxidizer and a recovery of surplus oxidizer which are separate between the first group and the second group.

9. The method for producing electricity at high temperature as claimed in claim 8, according to which the third and fourth zones of the first and second group of interconnectors are arranged such that the distribution of the oxidizer to the cathode of the cells of the first group is carried out in counter-current to the distribution of the cells of the second group.

10. The method for producing electricity at high temperature as claimed in one of claims 5 to 9, the fuel being hydrogen or methane ($CH_4$) or a mixture of the two.

11. The method for the high-temperature electrolysis of steam $H_2O$, or the co-electrolysis of steam $H_2O$ and of carbon dioxide $CO_2$ as claimed in one of claims 1 to 4, and the method for producing electricity at high temperature as claimed in one of claims 5 to 10, according to which the supply of the gases in the first zone of the first group of interconnectors is connected in series to the supply of the gases in the first zone of the second group of interconnectors.

12. The method as claimed in claim 11, according to which cells of different sizes between the first and the second groups are used, so that all the cells are at the same voltage with different fuel compositions.

13. The method for the high-temperature electrolysis of steam $H_2O$, or the co-electrolysis of steam $H_2O$ and of carbon dioxide $CO_2$ as claimed in one of claims 1 to 4, and the method for producing electricity at high temperature as claimed in one of claims 5 to 10, according to which the supply of the gases in the first zone of the first interconnector is in parallel to the supply of the gases in the first zone of the second interconnector.

21

**14.** The method for the co-electrolysis of steam $H_2O$ and of carbon dioxide $CO_2$ as claimed in claim 13, according to which the first and the second group are supplied with the same $H_2O/CO_2/CO$ ratio.

**15.** The method as claimed in one of claims 11 to 14, according to which, in operation, the supply in series is changed into supply in parallel, and according to which the flow rates and compositions are simultaneously made different between the two groups so as to manage a premature degradation of the cells of one of the two groups.

**Fig.1**

**Fig.2**

Fig.3

Fig.4

# Fig.5

Fig.6A   Fig.6B   Fig.6C

Fig.7A

Fig.7B

Fig.8A

Fig.8B

**Fig.9A**

**Fig.9B**

**Fig.10**

**Fig.10A**

**Fig.10B**

**Fig.10C**

## Fig.11A

## Fig.11B

## RÉFÉRENCES CITÉES DANS LA DESCRIPTION

**Documents brevets cités dans la description**

- US 6855451 B2
- US 201440093805 A
- US 20130130139 A